# FASCICULE DE BREVET EUROPEEN

(11) **EP 3 459 013 B1**
(45) Date de publication et mention de la délivrance du brevet: **01.04.2026**
(21) Numéro de dépôt: 17730852.5
(22) Date de dépôt: 17.05.2017
(51) Int. Cl.: G06V 10/75, H04N 1/32

(54) **PROCÉDÉ D'AUTHENTIFICATION AUGMENTÉE D'UN SUJET MATÉRIEL**
VERFAHREN ZUR ERWEITERTEN AUTHENTIFIZIERUNG EINER MATERIELLEN PERSON
METHOD OF AUGMENTED AUTHENTIFICATION OF A MATERIAL SUBJECT

(30) Priorité: 17.05.2016 FR 1654385; 13.07.2016 FR 1656796
(43) Date de publication de la demande: 27.03.2019
(73) Titulaire: Kerquest, 73310 Chindrieux (FR)
(72) Inventeur: BOUTANT, Yann, 73310 Chundrieux (FR); FOURNEL, Thierry, 42330 Saint-Galmier (FR)
(74) Mandataire: Atout PI Laplace
(86) Numéro de dépôt international: PCT/FR2017/051196
(87) Numéro de publication internationale: WO 2017/198950

(56) Documents cités:
- WAN-LEI ZHAO ET AL: "Scale-Rotation Invariant Pattern Entropy for Keypoint-Based Near-Duplicate Detection", IEEE TRANSACTIONS ON IMAGE PROCESSING, IEEE SERVICE CENTER, PISCATAWAY, NJ, US, vol. 17, no. 2, February 2009 (2009-02-01), pages 412 - 423, XP011249840, ISSN: 1057-7149
- CHONG-WAH NGO ET AL: "Fast tracking of near-duplicate keyframes in broadcast domain with transitivity propagation", ACM MULTIMEDIA 2006 & CO-LOCATED WORKSHOPS : OCTOBER 23 - 27, 2006, SANTA BARBARA, CALIFIRNIA, USA ; MM '06 ; PROCEEDINGS, ACM PRESS, [NEW YORK, NY], 23 October 2006 (2006-10-23), pages 845 - 854, XP058233396, ISBN: 978-1-59593-447-5, DOI: 10.1145/1180639.1180827
- SHYU ET AL: "Image encryption by multiple random grids", PATTERN RECOGNITION, ELSEVIER, GB, vol. 42, no. 7, July 2009 (2009-07-01), pages 1582 - 1596, XP026026945, ISSN: 0031-3203, [retrieved on 20080830], DOI: 10.1016/J.PATCOG.2008.08.023
- RAN-ZAN WANG ET AL: "Incrementing visual cryptography using random grids", OPTICS COMMUNICATIONS, ELSEVIER, AMSTERDAM, NL, vol. 283, no. 21, 14 June 2010 (2010-06-14), pages 4242 - 4249, XP028360620, ISSN: 0030-4018, [retrieved on 20100620], DOI: 10.1016/J.OPTCOM.2010.06.042

## Description

La présente invention concerne le domaine technique de l'authentification et du contrôle d'intégrité de sujets matériels ainsi que le domaine de la cryptographie visuelle. Dans une application préférée mais non exclusive, l'invention concerne le domaine de l'authentification unitaire de sujets matériels.

Il est connu des méthodes d'appariement d'images destinées à une reconnaissance / localisation d'objet en asservissement visuel ou navigation en robotique, à la reconstruction d'une même scène depuis différents points de vue en stéréoscopie, à l'assemblage de vues à recouvrement partiel en photographie panoramique ou encore à la reconnaissance de formes en recherche d'image / indexation de bases de données-images. Il existe également des méthodes de suivi d'objets dans le temps. Cependant, toutes ces méthodes cherchent à déterminer la ressemblance plus ou moins grande existant entre deux images sans permettre pour autant une authentification des images ou des sujets dont sont issus les images ou dont les images sont des acquisitions. L'état de la technique pertinent comprend Wan-Lei Zhao et al.: "Scale-Rotation Invariant Pattern Entropy for Keypoint-Based Near-Duplicate Detection", IEEE TRANSACTIONS ON IMAGE PROCESSING, vol. 17, no. 2, février 2009 (2009-02), pages 412-423, XP011249840, ISSN: 1057-7149 et Chong-Wah Ngo et al.: "Fast tracking of near-duplicate keyframes in broadcast domain with transitivity propagation", ACM MULTIMEDIA 2006 & CO-LOCATED WORKSHOPS : OCTOBER 23 - 27, 2006, SANTA BARBARA, CALIFIRNIA, USA ; MM '06 ; PROCEEDINGS, ACM PRESS, [NEW YORK, NY], 23 octobre 2006 (2006-10-23), pages 845-854, XP058233396,DOI: 10.1145/1180639.1180827.

Ainsi, il est apparu le besoin d'un procédé de mise en relation de deux images qui soit en mesure de rendre compte de l'aléa intrinsèque présent dans l'une au moins des deux images ou encore de rendre compte de l'aléa intrinsèque présent dans les deux images et de l'expliciter par comparaison. C'est-à-dire notamment un procédé de mise en relation deux images qui permet d'expliciter et d'utiliser la variabilité singulière, à différentes échelles, d'attributs tels que notamment la texture ou les contours.

Afin d'atteindre cet objectif, l'invention concerne un procédé de détermination d'une empreinte relationnelle entre deux images comprenant :
- la mise en œuvre d'une première image d'un sujet matériel et d'une image de référence différente de la première image,
- une phase de calcul de vecteurs de similarité entre des pavés appartenant respectivement à l'image du sujet matériel et à l'image de référence, en utilisant une méthode de calcul définie par un type d'indicateur de similarité et un rang de similarité pour obtenir un champ de vecteurs d'empreinte, formé par les vecteurs de similarité, comprenant au moins une région désordonnée au sens d'un critère entropique,
- une phase d'enregistrement en tant qu'empreinte relationnelle d'une représentation du champ de vecteurs d'empreinte calculé à l'étape précédente,
- une étape d'utilisation en tant que signature relationnelle d'une représentation numérique de l'empreinte relationnelle.

L'empreinte relationnelle selon l'invention est susceptible d'être utilisée dans diverses applications par exemple pour authentifier, identifier, inspecter, une image ou un sujet matériel après acquisition d'une image de ce dernier.

L'invention possède l'avantage de mettre en œuvre, d'une part, les propriétés d'unicité, de non reproductibilité et d'imprédictibilité de la matière issue d'un sujet matériel, et utilise la mise en relation d'images en vue notamment de déterminer une empreinte dite relationnelle d'une première image par rapport à une deuxième image, l'une au moins des images étant une image d'un sujet matériel. De cette empreinte relationnelle peut être dérivé via un conditionnement numérique, une signature relationnelle destinée à réaliser des taches d'authentification automatique. De cette empreinte relationnelle peut également être dérivé via un conditionnement cognitif un stimulus relationnel destiné à permettre une authentification s'adressant à au moins un des sens d'un utilisateur humain sans formation ni matériel spécifique préalable, en utilisant la capacité de ce dernier à jauger ou juger de la présence et de la qualité d'un phénomène. C'est ce que nous appelons l'authentification augmentée.

Au sens de l'invention un champ de vecteurs, peut être entendu comme un ou plusieurs champs de scalaires, et plus généralement à un ou plusieurs champs de tenseurs, sachant qu'un tenseur d'ordre 0 est un scalaire et qu'un tenseur d'ordre 1 est un vecteur. Ainsi au sens de l'invention l'expression champ de vecteurs doit s'entendre comme étant équivalente à l'expression champ de tenseurs, les deux expressions pouvant être utilisées indifféremment sauf indication contraire. Une variante de l'invention mettant en œuvre des champs de tenseurs, le cas échéant de différents ordres pour la détermination d'une même empreinte relationnelle est envisageable, dans la mesure où elle n'est pas incompatible avec les différentes caractéristiques de mise en œuvre du procédé.

L'ensemble des vecteurs de similarité calculés lors de la phase de calcul de vecteurs de similarité entre pavés appartenant respectivement aux première et deuxième images est assimilable à au moins un champ de vecteurs en cela qu'il est possible théoriquement de calculer en tout point de l'image de référence un ou plusieurs vecteurs de similarité, en utilisant en chaque point et pour chaque vecteur de similarité une méthode de calcul définie par un type d'indicateur de similarité et un rang de similarité. Il est possible aussi de compléter une portion de champ calculable par une interpolation ou encore une extrapolation ou encore une fonction vectorielle à valeurs convenues a priori, en tous les autres points de l'image de référence pour approximer ou reconstituer un champ au sens strict.

Un champ de vecteurs d'empreinte, au sens de l'invention, est une version échantillonnée d'un champ de vecteurs au sens strict, constituée d'un ou de champ(s) de vecteurs de similarité, ce ou ces champ(s) étant constitué(s) de vecteurs de similarité calculés chacun en leur point d'application selon la même méthode de calcul.

Ainsi, un champ de vecteurs d'empreinte, au sens de l'invention, peut être composé d'un champ de vecteurs de similarité ou d"une superposition de champs de vecteurs de similarité. Plusieurs champs de vecteurs de similarité peuvent ainsi être superposés pour former un champ de vecteurs d'empreinte.

Par superposition de champs de vecteurs de similarité on entend, par exemple en un même point d'application la somme vectorielle de leurs vecteurs de similarité respectifs, et/ou en des points d'application quelconques la juxtaposition de leurs vecteurs de similarité respectifs.

Étant entendu que, le cas échéant, les manipulations de champs de vecteurs de similarité, ci-dessus exposées, se répercutent point à point sur les vecteurs de similarité constitutifs du champ de vecteur d'empreinte, et sur leur méthode individuelle de calcul.

De plus, il peut être utile dans certaines exécutions de l'invention de conserver l'historique des manipulations effectuées (pour chaque vecteur de similarité sa méthode de calcul d'obtention et les éventuelles combinaisons avec d'autres vecteurs) en particulier avant de finaliser une empreinte relationnelle, et classifier ses constituants.

Le champ de vecteurs d'empreinte comprend selon le procédé de l'invention au moins une région désordonnée et le cas échéant une région régulière.

La représentation du ou des champs de vecteurs d'empreinte calculés selon le procédé décrit comprend, pour former l'empreinte relationnelle, selon les cas :
- l'ensemble des vecteurs de similarité calculés
- une partie seulement des vecteurs de similarité calculés
- tout ou partie des vecteurs résultant d'une combinaison des vecteurs de similarité calculés.

En outre, l'empreinte relationnelle peut contenir en particulier pour chaque vecteur de similarité considéré sa méthode de calcul et/ou son caractère désordonné ou non au sens d'un critère entropique.

Selon le procédé de l'invention, l'empreinte relationnelle est mise sous une forme propice à la réalisation de fonctionnalités telle que l'authentification dans diverses configurations sous différentes formes.

Ainsi l'empreinte relationnelle peut être constituée d'une ou plusieurs classes de vecteurs de similarité, selon qu'ils sont de caractère désordonné ou non, et/ou obtenus selon une méthode de calcul ou une autre, et/ou géographiquement répartis d'une manière ou une autre dans une image, et/ou indépendants ou pas les uns des autres, et/ou stables ou pas ...

L'empreinte relationnelle peut ne contenir qu'une classe de vecteurs de similarité, constituée par tout ou partie des vecteurs de similarité formant le champ de vecteur d'empreinte calculé.

Les empreintes relationnelles d'un ensemble d'images sujet peuvent faire référence à une même image sujet. Le cas échéant une même image sujet peut faire partie d'un deuxième ou énième ensemble d'images sujet faisant référence à une autre image de référence.

L'empreinte relationnelle d'une image sujet peut faire référence à une image de référence d'une classe différente (exemple de l'image sujet d'un matériau cellulaire en référence à une image de référence qui est une image d'un morceau de papier, ou encore d'un morceau de la peau d'une personne).

L'empreinte relationnelle d'une image sujet peut également faire référence à une image de la même classe (exemple d'un billet avec son talon) ou encore à elle-même. Dans ce dernier cas, l'image sujet peut être transformée pour générer une image de référence permettant un calcul au premier rang de similarité d'un champ de vecteurs d'empreinte dont une région est désordonnée. Selon un mode préféré, l'image sujet est transformée en un négatif (compatible avec la gamme dynamique du dispositif de restitution éventuel) avant d'appliquer la phase de calcul de vecteurs de similarité.

L'empreinte relationnelle d'une image sujet peut également faire référence à une image d'une classe donnée, le cas échéant formée et/ou décrite au moins partiellement par un procédé de synthèse d'images tel qu'un procédé de génération de textures dynamiques. Lorsque le procédé de synthèse d'images fait appel à au moins un paramètre d'entrée appartenant à un ensemble de grande dimension, comme dans le cas d'un procédé de réaction-diffusion a image d'entrée (pseudo-)aléatoire, ce ou ces paramètres d'entrée peuvent servir de graine, le cas échéant secrète, pour générer à la demande l'image de référence correspondante.

Une empreinte relationnelle peut également être déterminée selon une ou plusieurs images de référence, permettant d'utiliser le procédé de l'invention dans plusieurs environnements, chacun utilisant une même image de référence, en maintenant une étanchéité entre les environnements.

Selon une caractéristique de l'invention, le procédé comprend, préalablement à la phase d'enregistrement, une étape de classification de vecteurs de similarité en au moins une classe dite désordonnée, et une classe dite régulière, consistant à attribuer chacun des vecteurs de similarité à l'une ou l'autre des classes selon un critère entropique régional et un seuil de classification.

Selon une caractéristique de l'invention, lorsque l'indicateur de similarité est choisi d'être calculé à un rang égal à un, chaque vecteur de similarité est versé/ajouté soit dans la classe désordonnée, soit dans la classe régulière, selon qu'il vérifie ou non le critère entropique , le vecteur nul pouvant être alors introduit/ajouté respectivement dans la classe régulière, ou dans la classe désordonnée respectivement, comme complément.

On peut enregistrer l'empreinte relationnelle par exemple sous la forme d'une liste d'ensembles de vecteurs de similarité liés à leurs points de référence, selon leur classe d'appartenance.

Selon une caractéristique de l'invention, la signature relationnelle est enregistrée en vue d'une utilisation ultérieure, de préférence en base de données voire dans un code graphique.

Selon une caractéristique de l'invention, le procédé comprend une étape de compression du champ de vecteurs d'empreinte et enregistrement en tant qu'empreinte relationnelle du résultat de la compression.

Selon une caractéristique de l'invention, l'enregistrement de l'empreinte relationnelle est associé à l'enregistrement d'au moins une des images utilisées.

Il doit être noté qu'au sens de l'invention le terme « enregistrement » sans précision est entendu au sens large sous réserve bien entendu d'être compatible avec la mise en œuvre correspondante de l'invention. Ainsi le terme enregistrement vise, au sens de l'invention, un enregistrement de toute manière appropriée sous une forme numérique ou analogique. Parmi les modes d'enregistrement compatibles avec l'invention, il est possible de citer notamment : un enregistrement sous un format informatique et/ou électronique quelconque, un enregistrement sous une forme imprimée sur un support adapté à la mise en œuvre de l'invention, un enregistrement photographique, couleur ou noir et blanc, un enregistrement sous une forme holographique, un enregistrement sous forme gravée notamment au laser, sans que cette liste ne soit limitative ou exhaustive.

Au sens de l'invention, il faut entendre par pavé, une partie d'une image repérée qui contient des informations spatiales, sur la structure ou microstructure d'un objet matériel (par exemple des inhomogénéités naturellement présentes), et/ou de nature structurelle synthétique (par exemple un motif ou un pseudo-aléa synthétisé) et/ou encore des caractéristiques locales calculées à partir de ces informations spatiales structurelles ou micro-structurelles (par exemple des descripteurs invariants locaux). Dans le cadre de l'invention le terme texture ou micro-texture se rapporte à ce qui est visible ou observable sur une image tandis que le terme structure ou microstructure se rapporte au sujet matériel en lui-même. Ainsi, une texture ou micro-texture de la région d'authentification correspond à une image de la structure ou microstructure de la région d'authentification.

La phase de calcul de vecteurs de similarité comprend : une étape de détermination d'un repère commun aux première et deuxième images ; une étape de détermination, dans la première image, d'un ensemble de pavés de référence chacun associé à au moins un point de référence disposant de coordonnées dans le repère commun ; une étape de recherche dans la deuxième image de pavés de concordance qui sont chacun appariés à un pavé de référence avec lequel ils présentent un certain degré de similarité et sont chacun associés à au moins un point de référence disposant de coordonnées dans le repère commun ; une étape de calcul des coordonnées de chaque vecteur de similarité à partir des coordonnées des points de référence de chaque pavé de référence et du pavé de concordance associé.

Selon une caractéristique de l'invention, les vecteurs de similarité sont calculés dans le plan ou un espace à deux dimensions.

Les pavés de référence peuvent couvrir l'intégralité de l'image support ou pas, peuvent être en recouvrement ou encore disjoints laissant une partie de l'image support non-couverte.

Les pavés de référence et/ou leur répartition spatiale peuvent être de nature prédéterminée ou de nature auto-adaptative. Il est même envisageable pour une même image de combiner ces deux configurations.

On peut les pré-déterminer à partir, par exemple :
- d'une grille donnée, sachant que cette grille peut être constituée de pavés de forme, taille et position régulières ou non (grille distordue);
- ou d'un ensemble de pavés unitaires distincts ,de forme, taille et position régulières ou non, avec ou sans recouvrement ;

Les pavés de référence et/ou leur répartition spatiale peuvent par ailleurs être déterminés de manière auto-adaptative, automatiquement lors de la mise en œuvre d'un algorithme de détection de caractéristiques locales par exemple.

Les points de référence et/ou leur distribution spatiale peuvent être de nature prédéterminée ou de nature auto-adaptative. Il est même envisageable pour une même image de combiner ces deux configurations.

On peut les pré-déterminer à partir, par exemple :
- des nœuds d'une grille donnée, sachant que cette grille peut être régulière ou non (grille distordue);
- ou d'un nuage de points.

Les points de référence et/ou leur répartition spatiale peuvent par ailleurs être déterminés de manière auto-adaptative, automatiquement lors de la mise en œuvre d'un algorithme de détection de points caractéristiques par exemple.

L'étape de recherche de pavés de concordance peut faire intervenir pour chaque pavé de référence le calcul d'une série d'indices de similarité entre la portion de la première image correspondant audit pavé de référence et une portion d'inspection de la deuxième image, la portion d'inspection étant déplacée dans la deuxième image pour chaque indice de similarité et en sélectionnant comme pavé de concordance associé audit pavé de référence, la portion d'inspection présentant un degré de similarité remarquable avec ledit pavé de référence.

L'étape de recherche de pavés de concordance peut aussi comprendre la détermination, dans la deuxième image, d'un ensemble de pavés d'inspection, et, pour chaque pavé de référence :
- le calcul d'une série d'indices de similarité, chaque indice de similarité étant calculé entre la portion de la première image correspondant audit pavé de référence et la portion de la deuxième image correspondant à un pavé d'inspection, le pavé d'inspection étant différent pour chaque indice,
- la sélection comme pavé de concordance associé audit pavé de référence, le pavé d'inspection présentant un degré de similarité donné avec ledit pavé de référence.

La détermination des ensembles des pavés de référence et d'inspection peut être effectuée de manière auto-adaptative en mettant en œuvre un algorithme de détection de caractéristique et de description de caractéristiques, par exemple issus de filtres de Law ou de motifs binaires locaux (LBP) ou de gradient de niveau(x) de signal ou sur les distributions ou spatio-temporels, par exemple intégrés dans les méthodes suivantes A-KAZE, SURF, SIFT, ORB .....

L'étape de recherche de pavés de concordance peut encore se faire en combinant les deux approches précédemment décrites, de manière séquentielle et/ou simultanée.

Au sens de l'invention la similarité entre deux pavés est évaluée selon une méthode de calcul, à l'aide d'un indicateur de similarité et un rang de similarité n choisi (le premier maximum si n=1, le second maximum si n=2, etc.), dont la valeur, dite indice de similarité (positive ou absolue) est d'autant plus importante que les pavés sont similaires. Le degré de similarité remarquable, est l'indice de similarité maximal de la série d'indices de similarité calculés pour un pavé de référence donné et pour une méthode de calcul.

Selon une caractéristique de l'invention, le degré de similarité correspond au rang du pavé de d'inspection retenu en tant que pavé de concordance dans la série des pavés d'inspection ordonnés selon leur indice de similarité avec le pavé de référence en ordre décroissant.

La corrélation standardisée ou la corrélation par différence peuvent être utilisées comme type d'indicateur de similarité. Plus généralement, l'inverse d'une distance ou d'une divergence appropriée peut être utilisé comme indicateur de similarité. L'indicateur de similarité peut être appliqué aussi pour l'appariement de points d'intérêt caractéristiques détectés et quantifiés au moyen de descripteurs locaux entre pavés, par exemple issus de filtres de Law ou de motifs binaires locaux (LBP) ou encore de gradients calculés sur les niveau(x) de signal ou sur les distributions spacio-temporels. Ainsi les moyens de comparaison intégrés dans les méthodes suivantes A-KAZE, SURF, SIFT, ORB....peuvent être utilisés comme indicateurs de similarité au sens de l'invention.

Selon une caractéristique de l'invention, durant la phase de calcul de vecteurs de similarité entre les première et deuxième images, l'indicateur de similarité local est choisi à un rang local supérieur ou égal à un.

Selon une caractéristique de l'invention, les deux images mises en œuvre sont identiques et un indicateur de similarité de rang 2 est choisi pour calculer les vecteurs de similarité dans la détermination de l'empreinte relationnelle.

Selon le procédé de l'invention, les vecteurs de similarité sont calculés jusqu'à un rang suffisamment élevé pour obtenir un champ de vecteurs d'empreinte comprenant au moins une région désordonnée au sens d'un critère entropique.

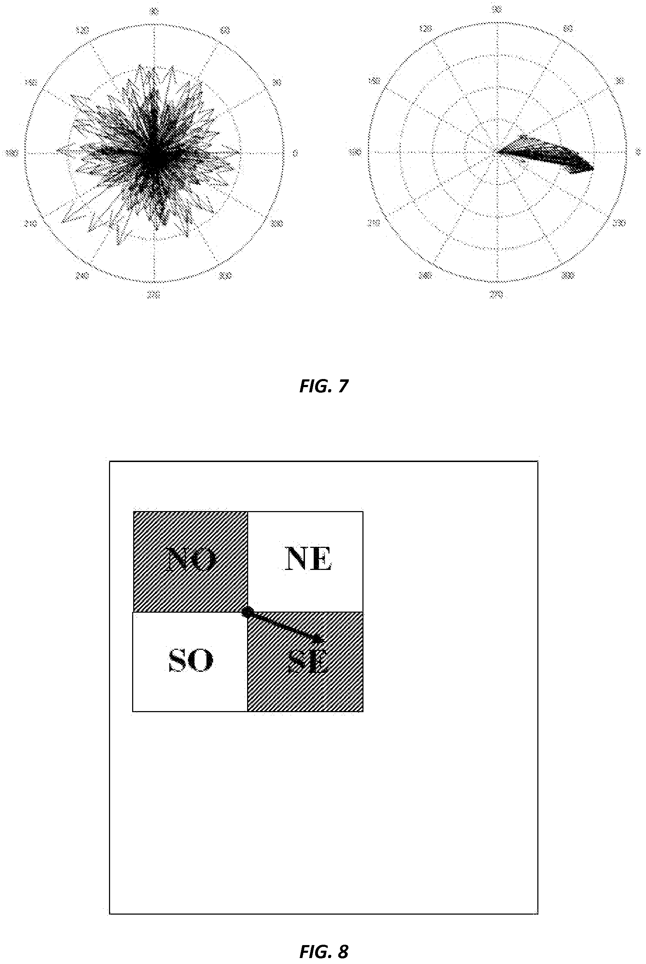

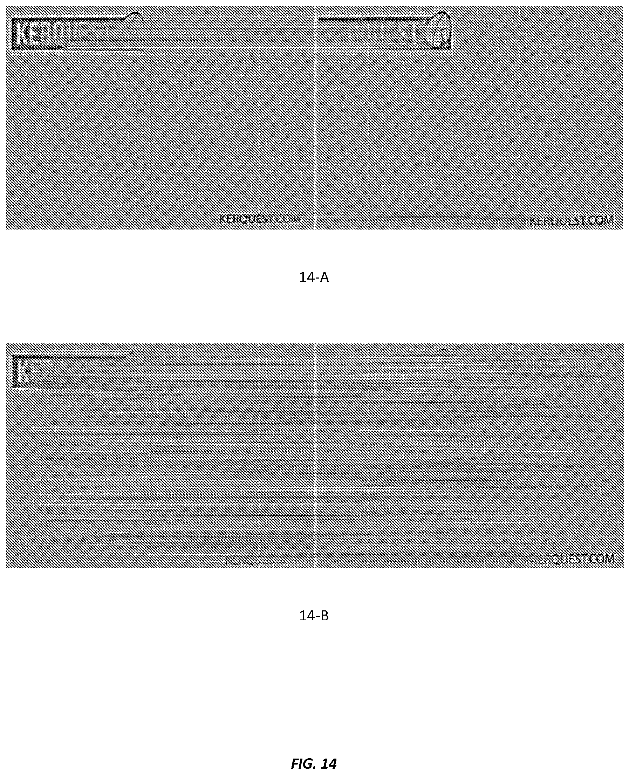

Au sens de l'invention, le critère entropique est destiné à décider du caractère désordonné ou non d'un vecteur de similarité candidat vis à vis des vecteurs de similarité situés dans un de ses voisinages dont la forme et la taille sont prédéfinies. Ce critère binaire consiste par exemple à appliquer un seuil prédéfini à un indice d'imprédictibilité, évalué dans le voisinage, tel que 5 l'entropie de l'histogramme (normalisé) de l'orientation des vecteurs de similarité, le cas échéant pondérés par leur norme. Le critère entropique est alors vérifié et le vecteur de similarité candidat sera qualifié de désordonné (c'est à dire placé dans la classe des vecteurs désordonnés) lorsque l'indice d'imprédictibilité a une valeur supérieure (ou égale) à la valeur du seuil (par exemple 1 BIT). Dans le cas contraire le vecteur de similarité candidat sera placé dans la classe régulière. D'une autre manière, le rapport de la moyenne sur l'écart-type des modules des vecteurs de similarité au voisinage d'un vecteur de similarité candidat peut être considéré comme critère entropique. Si supérieure à 1 typiquement alors le vecteur de similarité candidat rejoindra la classe désordonnée, dans le cas contraire il sera versé dans la classe régulière. Il va de soi qu'un compromis entre taille du voisinage et finesse de discrimination doit être recherché. De même la forme du voisinage peut-être importante selon que l'on travaille sur des lignes, des colonnes ou encore des pavés rectangulaires. D'autres critères entropiques sont applicables dans le cadre de cette invention. Au sens de l'invention, lorsqu'une région d'un champ de vecteurs de similarité de rang n comprend dans une région connexe un ensemble dense de vecteurs de similarité tous désordonnés, dans le sens d'absence de règle sous-jacente, d'aspect chaotique, elle est dite désordonnée de rang n. Dans le cas contraire, elle est dite régulière, dans le sens de l'existence d'une règle sous-jacente, par exemple au sens de la régularité du champ de vecteurs sous-jacent qu'elle représente et de la continuité des lignes de champ associées. On peut par exemple aussi parler de classe ordonnée tel qu'illustré en figure 7, dans la mesure où la distribution angulaire à droite est peu dispersée, alors que pour la classe désordonnée, la distribution angulaire est totalement dispersée sur les 360° du cercle trigonométrique. De même, tel qu'illustré en figure 14, on peut parler de classe régulière en 14-B dans la mesure où la règle applicable est 'le plus de correspondances dans la zone vierge d'impression' alors qu'en 14-A il y a absence de correspondance sur la zone considérée, donc implicitement du désordre de correspondance.

Les images que le procédé de l'invention met en œuvre doivent être au moins dans certaines régions à structures spatiales localement variables de façon à pouvoir y évaluer de manière significative la similarité au sens de l'indicateur de similarité, entre pavés de référence de la première image et portions ou pavés d'inspection de la seconde image. Au sens de l'invention, il faut entendre par structures localement variables la présence d'attributs image tels que des contours et/ou des textures, le cas échéant multi-échelles, susceptibles de caractériser l'appartenance de l'image sujet à une classe d'images ou de caractériser l'image sujet à l'intérieur d'une même classe d'images.

Selon une caractéristique de l'invention, l'image de référence pour chaque sujet matériel est l'image inversée de l'image du sujet matériel, image de référence utilisée pour le procédé de détermination de l'empreinte relationnelle.

Selon une caractéristique de l'invention, l'image de référence est identique pour l'ensemble des sujets matériels considérés.

Selon une caractéristique de l'invention on peut utiliser comme image de référence une concaténation de plusieurs images, ce qui revient à calculer des vecteurs de similarité sur une même image de départ relativement à plusieurs sujets matériels par exemples, ou des sujets matériels et des images de synthèses.

Le terme image doit être entendu au sens large et non pas limité au seul sens d'une image optique résultant notamment de la sollicitation de la région d'authentification par un rayonnement lumineux visible. Ainsi, les images d'authentification et de vérification peuvent être obtenues par tout type de sollicitation de la région d'authentification en association avec une chaîne d'acquisition adaptée, étant entendu que le même type ou la même nature de sollicitation est mis en œuvre pour l'acquisition des images d'authentification et de vérification. Parmi les types de sollicitations ou les modes d'acquisition envisageables il est possible notamment de citer : les ultrasons, l'Infra-rouge lointain, les Tera-Hertz, les rayonnements X ou gamma, la tomographie X ou laser, la radiographie X, la résonance magnétique, sans que cette liste ne soit limitative ou exhaustive. On peut aussi entendre par le terme image au sens de l'invention une représentation 3D d'un sujet matériel avec une micro_texture adaptée représentant la microstructure stable, intrinsèque, unique et non reproductible du sujet matériel considéré.

Des pré-traitements optiques et\ou numériques d'amélioration de l'image peuvent ainsi lui être appliqués pour un meilleur rapport signal à bruit et/ou une meilleure perception visuelle. Ainsi un zoom optique (dispositifs à focales variables) et\ou numérique pour mieux sélectionner l'échelle d'observation, une déconvolution de l'image afin de supprimer un défaut de mise au point ou un bougé, un filtrage passe-bande pour sélectionner \ privilégier les détails de fréquences intermédiaires ou un rehaussement de contraste pour accentuer le contraste peuvent à titre d'exemple être appliqués. Ainsi, afin de faciliter la visualisation de l'empreinte relationnelle, les images d'authentification et de vérification peuvent préalablement à leur affichage voire à leur enregistrement subir un ou plusieurs traitements d'amélioration tels que par exemple une augmentation du contraste, une augmentation de la luminosité, une égalisation de l'histogramme des niveaux niveau de gris, une égalisation des histogrammes dans les couleurs de décomposition, un filtrage passe bande. A cet égard, il doit être rappelé que le procédé selon l'invention peut être mis en œuvre avec des images en niveau de gris et/ou avec des images couleurs ou multispectrales, ou encore des images binaires.

Selon une autre caractéristique de l'invention, la position de la région d'authentification sur le sujet à authentifier est enregistrée. Un tel enregistrement permet, bien qu'il ne soit pas absolument nécessaire, de faciliter la phase de vérification.

Selon encore une autre caractéristique de l'invention, la position de la région d'authentification sur le sujet à authentifier est repérée sur le sujet à authentifier. Ce repérage permet, bien qu'il ne soit pas absolument nécessaire, également de faciliter la phase de vérification.

Selon une caractéristique de l'invention, la phase de calcul du champ de vecteurs d'empreinte comprend préalablement au calcul du champ de vecteurs d'empreinte une étape de transformation de l'une et/ou l'autre des première et deuxième images.

Selon une caractéristique de l'invention, l'étape de transformation d'image appliquée consiste en au moins une transformation géométrique appliquée localement à une image choisie parmi les transformations linéaires ou des combinaisons de transformations linéaires. De manière, préférée la transformation est une transformation à au moins un point fixe ou quasi-fixe. Par point quasi-fixe il convient d'entendre un point subissant un déplacement de très petite amplitude.

Selon une autre caractéristique, la transformation d'image induit une modification réduite ou de petite ou très petite amplitude de la partie d'image modifiée de l'image de la région d'authentification avant modification.

Selon encore une autre caractéristique de l'invention, le déplacement relatif est une translation, une rotation ou la combinaison d'une ou plusieurs rotation et/ou translation.

Selon encore une autre caractéristique de l'invention, la distance de déplacement relatif est réduite ou de petite ou très petite amplitude.

Selon une caractéristique de l'invention, l'étape de transformation est un recalage.

Selon une caractéristique de l'invention, le procédé comprend préalablement à la phase de calcul, une étape de paramétrage comprenant la détermination de l'un au moins des paramètres suivants :
- taille, forme, position des ou de chacun des pavés de référence appliqués à la première image,
- distribution spatiale prédéfinie des points de référence ou encore algorithme utilisé et données initiales pour les déterminer
- taille, forme, position des ou de chacun des pavés d'inspection appliqués à la deuxième image,
- indicateurs de similarité choisis et le cas échéant le(s) rang(s) à utiliser, le cas échéant comme valeur(s) initiale(s) lors d'une recherche incrémentale de région désordonnée,
- ordre(s) d'utilisation des première et deuxième images,
- taille, forme du voisinage pour l'évaluation du critère entropique,
- densité-seuil à partir duquel une région connexe formée de vecteurs désordonnés est déclarée désordonnée
- taille, forme, position des pavés de référence et/ou de concordance, ordre d'utilisation des première et deuxième images,
- taille et forme d'une fenêtre d'évaluation pour la détermination de l'existence d'une région désordonnée.

Selon une caractéristique de l'invention, le procédé comprend une étape d'utilisation en tant que signature relative ou relationnelle d'une image par rapport à l'autre d'une représentation numérique de l'empreinte relationnelle.

Selon une caractéristique de l'invention, le procédé comprend une étape de représentation sensorielle de l'empreinte relationnelle. Cette représentation sensorielle est alors de préférence visuelle et/ou sonore et/ou tactile.

Selon une caractéristique de l'invention, la phase de calcul du champ de vecteurs d'empreinte comprend :
- une étape de calcul de plusieurs champs de vecteurs de similarité intermédiaires entre l'une des deux images et l'autre image ayant subi une transformation différente d'un vecteur de similarité intermédiaire à l'autre,
- la comparaison des champs de vecteurs de similarité intermédiaires entre eux et conservation en tant que champ de vecteurs d'empreinte du champ de vecteurs de similarité intermédiaire présentant un optimum de similarité, maximum ou minimum.

Selon une caractéristique de l'invention, le procédé comprend, préalablement à la phase d'enregistrement, une étape de décomposition du champ de vecteurs de similarité en au moins une partie dite régulière et une partie dite désordonnée consistant à attribuer chacun des vecteurs de similarité à l'une ou l'autre des parties régulière et désordonnée selon un critère entropique régional.

Selon une caractéristique de l'invention, lorsque l'optimum local de similarité est choisi à un ordre égal à un, pour un rang local considéré, le vecteur de similarité concerné est ajouté soit dans la composante désordonnée du champ de vecteurs d'empreinte, soit dans la composante régulière du champ de vecteurs d'empreinte, selon qu'il vérifie ou non le critère entropique régional, le vecteur nul étant alors ajouté respectivement dans la composante régulière, ou dans la composante désordonnée.

Selon une caractéristique de l'invention, le procédé comprend une étape de codage de l'empreinte relationnelle, une mise en forme numérique, afin d'obtenir une signature relationnelle d'une image par rapport à une image de référence, pouvant servir d'authentifiant unitaire robuste de l'image sujet ou du sujet matériel imagé.

Dans ce dernier cas, issue du sujet matériel et non en correspondance avec le sujet matériel comme un simple identifiant, la signature relationnelle est destinée à singulariser le sujet matériel sans équivoque (unicité et caractère intrinsèque, d'où non reproductibilité) tout en étant re-générable à tout instant à partir d'une nouvelle acquisition d'image, et stable dans le temps dans le cadre d'une évolution normale du sujet matériel. L'image de référence peut être une image naturelle ou synthétique de nature parfaitement différente de l'image de départ (par exemple signature relationnelle d'un morceau de papier par rapport à un morceau de bronze fritté ou encore à un morceau de cuir).

Le codage de l'empreinte relationnelle constitue alors une étape dans l'obtention de la signature relationnelle où les vecteurs de similarité, en particulier les vecteurs de similarité de la classe désordonnée, sont soumis à une quantification selon les « lettres d'un alphabet de codage », typiquement mais non exhaustivement binaire, quaternaire ou autre.

L'étape de codage peut préserver le séquencement des vecteurs de similarité de l'empreinte relationnelle selon la topologie de l'image de référence dont ils sont issus. Dans le cadre d'une hiérarchisation d'accès à l'empreinte aléatoire, l'étape de codage peut utiliser une permutation pseudo-aléatoire des lettres obtenus, générée au moyen d'une graine secrète.

Selon un mode préféré de l'invention, le codage des vecteurs de similarité de l'empreinte relationnelle est effectué selon leur orientation, au moyen d'une rose des vents subdivisée en secteurs angulaires égaux, en mode quaternaire typiquement {Nord-Est, Nord-Ouest, Sud-Ouest, Sud-Est} ou encore en mode binaire {Nord-Est\Sud-Ouest, Nord-Ouest\Sud-Est}. La quantification peut être suivie d'une affectation de bits selon par exemple un code de Gray, et/ou d'une compression, par exemple entropique, par plages ou de type Huffman, ou encore algorithmique, par exemple par dictionnaire.

Dans une forme préférée, la signature relationnelle est une chaîne bits concaténés, obtenus par codage des vecteurs de similarité de la classe désordonnée selon les secteurs angulaires Nord-Est \ Sud-Ouest et Nord-Ouest \ Sud-Est dans lesquels s'inscrivent ses vecteurs de similarité.

Une signature relationnelle peut être utilisée pour discriminer et/ou identifier l'image sujet dans un ensemble d'images ou le sujet matériel objet de son acquisition dans un ensemble de sujets matériels.

Une signature relationnelle peut être obtenue à partir d'une image de référence qui est une transformée de l'image sujet. Elle revêt alors un caractère plus « absolu ».

La signature relationnelle à titre d'exemple d'utilisation pratique, permet de discriminer de façon stable et certaine un échantillon de papier dans une ramette de papier : un ensemble de 200 éléments sujets matériels, portions centimétriques de feuilles de papier imagées, sont ici considérés. La signature relationnelle présente un caractère plus « absolu » dans la mesure où l'image de référence est le complément à 1 de l'image standardisée d'un sujet matériel . Les paramètres de mise en œuvre sont : une répartition de points de référence selon les nœuds d'une grille régulière de pas 24x24 pixels ; des pavés de référence, de taille 64x64 pixels, centrés sur ces points de référence; pour chaque pavé de référence quatre pavés d'inspection de taille 64x64 pixels partitionnant une portion d'inspection de 128x128 pixels centrés en les points de référence ; , la corrélation centrée standardisée au rang 1 comme méthode de calcul (calcul de la série d'indices de similarité en superposant le pavé de référence courant à chaque pavé d'inspection considéré, et en choisissant comme pavé de concordance celui dont l'indice de similarité est le plus élevé) et une taille de voisinage 3x3 ( id est les 8 vecteurs de similarité entourant le vecteur courant) considéré pour l'évaluation du critère entropique. La classe / composante désordonnée est ainsi constituée de 11x15=165 vecteurs (Figure où un vecteur sur deux est représenté) dont la direction Nord-Est\Sud-Ouest, codée « 0 », ou bien Nord-Ouest\Sud-Est, codée « 1 », donne une signature binaire de 165 bits. La distance normalisée de Hamming mesurée entre les signatures issues d'images sujet différentes de sujets matériels distincts est en moyenne de (49.987+/-4.659) % avec un biais inférieur à 0.02 %. La distance de Hamming mesurée entre les signatures issues d'images sujet différentes d'un même sujet matériel, après recalage d'images, est en moyenne de (5.454+/-1.967) %. Les deux distributions sont quantitativement séparées de 12.452 au sens de la différence en valeur absolue entre leurs moyennes normalisées par la racine carrée de la demi-somme de leurs variances. Cela donne un pouvoir de discrimination pertinent pour l'utilisation automatique de la signature relationnelle dans la perspective d'une authentification unitaire de sujets matériels dans des familles contenant plusieurs millions ou milliards d'individus.

La signature relationnelle peut être utilisée comme graine, par exemple à l'entrée d'un algorithme de génération de nombres ou d'images pseudo-aléatoires .

La signature relationnelle peut être utilisée au sein de mécanismes cryptographiques.

Lorsque l'image sujet résulte de l'acquisition d'une image d'un sujet matériel, une signature relationnelle qui contient alors de l'aléa vrai, peut être raffinée par retraitement algorithmique. La signature relationnelle peut être soumise (sans transcodage si elle est binaire) à une correction de Von Neumann et un ou exclusif ou à une fonction de hachage ou encore à une fonction résiliente afin de constituer un générateur de nombres aléatoires.

En tant que telle la signature relationnelle peut constituer une image à partager dans le cadre d'un partage visuel de secret (on parlera de cryptographie visuelle lorsque la signature relationnelle vérifie les critères d'une séquence de nombres aléatoires indépendants). Dans une forme préférée, la signature relationnelle résulte d'une empreinte relationnelle réduite à sa classe / composante désordonnée, quantifiée selon les secteurs angulaires Nord-Ouest (NO ou 1), Sud-Ouest (SO ou 2), Sud-Est (SE ou 3) et Nord-Est (NE ou 4) dans lesquels s'inscrivent ses vecteurs de similarité. En substituant chaque code quaternaire par une sous-matrice triangulaire respectivement supérieure droit, supérieure gauche, inférieure gauche et inférieure droit, l'image partagée ainsi construite possède une texture à formes élémentaires triangulaires. Dans un partage secret à deux participants, la seconde image partagée peut être construite par exemple, en considérant le même triangle que celui adopté dans la première image partagée au même endroit si le bit du message secret à cet endroit est 0, en considérant le triangle opposé (ex. SE si le triangle dans la première image partagée était NO) si le bit du message secret à cet endroit est 1. Lorsque l'image sujet résulte de l'acquisition d'une image d'un sujet matériel, la première image partagée peut ne pas être sauvegardée mais reconstruite à partir d'une nouvelle acquisition du sujet matériel.

Toujours selon l'invention, la texture triangulaire des images partagées peut permettre d'introduire un mécanisme anti-fraude des images partagées. Une image supplémentaire conservée par le tiers de confiance lorsqu'il construit les images à partager, peut être utilisée lors du déchiffrement du message secret. Cette image supplémentaire, de même taille que les images partagées, est destinée à pointer le triangle opposé au triangle associé à chaque code quaternaire dans la première image partagée après construction de la seconde image partagée, au moyen d'une sous-matrice nulle sauf à l'Ouest (O), respectivement au Sud (S), à l'Est ou bien au Nord (N). La seconde image partagée est construite en recopiant le triangle correspondant de la première image partagée si le bit de message est 0 de façon à ce que la superposition des deux images partagées produise à cet endroit un (ce) triangle, en sélectionnant de façon aléatoire ou pseudo-aléatoire un triangle différent mais non opposé si le bit de message est 1 de façon à ce que la superposition des deux images partagées produise à cet endroit une encoche (et non un carré). A cet endroit, l'image supplémentaire est construite de façon à ce que superposée aux deux images partagées, la forme obtenue soit une équerre si le bit de message est 0, respectivement un carré (rectangle) si le bit de message est 1. Pour illustrer : si le code à la position i de la signature relationnelle est 1, il est créé à cette position un triangle NO dans la première image partagée (au sein d'une sous-matrice carrée). Si le bit de message est à 0, il est créer à cette même position un triangle NO dans la seconde image partagée et une sous-matrice (de même taille), nulle sauf à l'E (ou au S selon un tirage [pseudo-]aléatoire) dans l'image supplémentaire. Si le bit de message est à 1, il est créé à cette même position un triangle SO (ou au NE selon un tirage [pseudo-]aléatoire) dans la seconde image partagée et une sous-matrice nulle sauf à l'E (respectivement au S) dans l'image supplémentaire. De cette façon, la substitution frauduleuse d'un triangle par un autre dans une image partagée, fait apparaître : lors de la superposition des deux images partagées, un carré en moyenne une fois sur deux à l'endroit du message à la place d'une encoche, lors de la superposition des deux images partagées et de l'image supplémentaire, une encoche en moyenne une fois sur deux à l'endroit du fond (zone complémentaire au message) à la place d'une équerre.

La signature relationnelle peut également permettre d'authentifier l'image sujet selon un protocole sans divulgation de connaissance. Du fait qu'elle ne dévoile pas les structures des images sujet et de référence, la signature relationnelle peut avantageusement être utilisée comme réponse à un challenge consistant en un modèle de synthèse d'une classe d'images de référence. Une graine secrète partagée ou dérivée de la signature relationnelle peut être utilisée à la réception du challenge pour générer selon le modèle (qui peut être défini à la graine près par une équation, cas typiquement d'une réaction-diffusion) l'image de référence avant de déterminer l'empreinte relationnelle entre l'image sujet et l'image de référence générée, de là la signature relationnelle associée. Lorsque l'image sujet résulte de l'acquisition (dans des conditions pré-définies) d'une image d'un sujet matériel non clonable à l'échelle d'acquisition, le sujet matériel en question peut être utilisé comme fonction physique non clonable (de type « Physical Unclonable Functions ») destinée à son authentification à travers les paires de challenges / réponses précédentes.

Selon une caractéristique de l'invention, une même image de référence est utilisée comme première respectivement deuxième image systématiquement pour un ensemble d'images, permettant de calculer un ensemble de signatures relationnelles selon une même référence.

Selon une caractéristique de l'invention, le procédé de détermination d'une empreinte relationnel est mis œuvre avec au moins une image d'un sujet matériel présentant une zone présentant une micro-texture intrinsèque et aléatoire. Dans certaines formes de mise œuvre cette zone à micro-texture intrinsèque aléatoire peut être qualifiée de zone d'authentification. A cet égard, les inventeurs ont eu le mérite de démontrer que l'empreinte relationnelle au sens de l'invention peut être déterminée à partir d'images de zone à micro-texture intrinsèque et aléatoire sans qu'il soit nécessaire que ces zones présentent des formes, des contours ou des motifs ayant une dimension très nettement supérieure à celle de la micro-texture intrinsèque aléatoire.

Au sens de l'invention la micro-texture est intrinsèque et aléatoire en ce qu'elle résulte de la nature même de la zone d'authentification. Dans une forme de mise en œuvre préférée de l'invention, chaque sujet à authentifier appartient aux familles de sujets comprenant au moins une région d'authentification comprenant une structure intrinsèque essentiellement aléatoire non aisément reproductible c'est-à-dire dont la reproduction est difficile voire impossible en ce qu'elle résulte notamment d'un processus non prédictible à l'échelle d'observation. Une telle région d'authentification à structure de milieu continu intrinsèque essentiellement aléatoire non aisément reproductible correspond aux fonctions physiques non clonales en anglais « Physical Unclonable Functions » (PUFs) telles que notamment définies par la publication en anglais Encyclopedia of Cryptography and Security édition 01/2011 pages 929 à 934 dans l'article de Jorge Guajardo. De manière préférée, la région d'authentification d'un sujet matériel conforme à l'invention correspond à une fonction physique non clonale intrinsèque désignée en anglais par « Intrinsic PUFs » dans l'article précité.

Les inventeurs mettent à profit le fait que la nature aléatoire de la microstructure de la région d'authentification est inhérente ou intrinsèque à la nature même du sujet parce que résultant de son mode d'élaboration, de développement ou de croissance de sorte qu'il n'est pas nécessaire de rajouter à la région d'authentification une structure particulière, notamment une impression, ou encore une gravure. Cependant, cela n'exclut pas l'utilisation de singularités naturelles ou rapportées pour faciliter le recalage et/ou la mise à l'échelle relative par exemple, ou tout autre transformation d'une image relativement à l'autre.

Les inventeurs ont montré, de plus, qu'un champ de vecteurs de similarité régulier n'apparaît visuellement qu'uniquement lorsque les images des structures aléatoires sont identiques à des modifications réduites près et n'apparaissent pas lorsque les images ne sont pas identiques le cas échéant à une transformation ou de petites déformations près, ou ne résultent pas de l'acquisition de la même région d'authentification d'un sujet. A noter que visuellement les vecteurs de similarité d'un champ de vecteurs de similarité régulier apparaissent portés par des lignes de champ sous-jacentes.

L'invention peut ainsi assurer une authentification visuelle unitaire via l'empreinte relationnelle et un conditionnement sensoriel tout en permettant comme discuté précédemment une authentification unitaire automatique via la signature relationnelle.

La visualisation d'un champ de vecteurs de similarité suffisamment dense, régulier ou non, permet en outre, dans la cadre de l'invention, de sécuriser ou conforter l'opérateur dans sa prise de décision pour valider ou non l'authenticité du sujet à authentifier. A cet égard, il doit être souligné que l'invention permet de lever le doute quant à l'authenticité du sujet à authentifier dans la mesure où un champ de vecteur de similarité régulier est observé. Il y a alors certitude sur l'authenticité (si les conditions de mise en œuvre sont bien respectées). En revanche, en cas de non observation d'un champ de vecteurs régulier, il est possible de conclure avec certitude à la non authenticité, à condition expresse d'avoir respecté des paramètres stricts de mises en œuvre, et si le sujet matériel n'a pas subi de modifications trop dommageables entre son enregistrement et son contrôle.

De plus, les inventeurs ont mis en évidence le fait que dans la mesure où le sujet matériel présente une stabilité matérielle suffisante dans le temps, des images réalisées à des instants différents pouvant être séparés par plusieurs jours, mois, ou années permettent selon l'invention d'engendrer de tels champs de vecteurs de similarité réguliers. De plus, selon l'invention le sujet à authentifier peut subir des modifications après l'enregistrement de l'image d'authentification tout en restant authentifiable dans la mesure où une partie de la région d'authentification n'a pas été profondément affectée par ces modifications volontaires ou non.

Selon une caractéristique de l'invention, une signature relationnelle candidate est comparée automatiquement avec une signature relationnelle authentique précédemment enregistrée, en base de données par exemple, selon un critère statistique de similarité permettant de considérer la signature relationnelle candidate comme similaire à la signature relationnelle enregistrée si un seuil de décision est atteint.

Selon une caractéristique de l'invention, pour chaque signature relationnelle mise en œuvre, au moins une image ayant permis de générer une signature relationnelle est une acquisition en provenance d'une zone de référence d'un sujet matériel, ladite zone de référence ayant une micro-structure intrinsèque et aléatoire également appelée structure matérielle non clonable, en anglais PUF pour « Physical Unclonable Functions »). Dans ce cadre, la validation selon l'atteinte du seuil de décision implique aussi qu'un sujet matériel candidat est similaire, voire identique au sujet matériel de référence. La signature relationnelle relative au sujet candidat est alors établie à partir d'au moins une image d'une zone ou région d'authentification du sujet candidat ayant une micro-structure intrinsèque et aléatoire. De même, la signature relationnelle relative au sujet de référence ou authentique est établie à partir d'au moins une image d'une zone ou région d'authentification du sujet authentique ayant une micro-structure intrinsèque et aléatoire. Il y aura identité ou similarité des signatures relationnelles si les zones d'authentification sont identiques ou similaires. Au sens de l'invention, il convient d'entendre que l'image est dite de la zone à micro-structure intrinsèque et aléatoire en ce que l'image comprend au moins ladite zone mais n'est pas nécessairement composée uniquement de cette zone.

Selon une caractéristique de l'invention, les images d'authentification et/ou de vérification font l'objet d'au moins un dé-tramage et/ou filtrage (passe-bande par exemple) avant mise en œuvre au sens de l'invention. Cette caractéristique permet d'éliminer d'éventuels motifs périodiques susceptibles d'interférer avec ou de faire obstacle à la bonne exécution des différentes étapes de détermination d'une empreinte relationnelle ou signature relationnelle viable en cas de sujet authentique.

Le procédé s'intéressant à la relation caractéristique entre deux images par le biais d'une empreinte relationnelle permet aussi d'utiliser des représentations cognitives de cette dernière pour contrôler "d'un coup d'œil" le degré total ou partiel de similarité entre ces deux images. Il s'agit d'un conditionnement, d'une mise en forme cognitive de l'empreinte relationnelle de façon à pouvoir être perçue et interprétée par un humain voire un humanoïde dans un processus d'authentification sensorielle. Ce conditionnement est complémentaire du conditionnement sous la forme d'une signature relationnelle : le premier est conçu principalement pour permettre une prise de décision intuitive au niveau de l'utilisateur tandis que le second est conçu principalement pour permettre une prise de décision automatique par une machine. Ces conditionnements peuvent se rejoindre lorsque l'on met en œuvre selon notre procédé des signatures relationnelles à des fins de cryptographie visuelle, et que c'est l'utilisateur qui doit juger du résultat obtenu (intelligible, attaque éventuelle, aspect esthétique,...) ou plus généralement lorsqu'une signature relationnelle est utilisée pour produire un effet perceptible par un utilisateur.

Nous appelons dans ce document stimulus relationnel, le conditionnement de l'empreinte relationnelle sous forme de signal capable d'être perçu par le système sensoriel d'un utilisateur moyen et lui permettre de l'interpréter. Par perception on entend une perception visuelle, auditive, olfactive, tactile, gustative, de nature temporelle, spatiale, cela en tout ou partie séparément ou simultanément. On parlera d'authentification sensorielle dans la généralité, d'authentification visuelle, tactile, sonore, ... respectivement selon qu'elle utilise les capacités visuelles, tactiles, sonores,... de l'utilisateur.

Durant l'étape de mise en forme du stimulus relationnel, un mode préféré est de s'appuyer sur les capacités de perception visuelles (SVH) et/ou sonores et/ou encore tactiles et/ou audiovisuelles et/ou spatio-temporelles de l'utilisateur.

A titre d'exemple de stimulus relationnel, à partir d'une empreinte relationnelle donnée peut être une représentation de celle-ci sous forme d'image colorée ou pas, avec une ou plusieurs régions distinctes 1D, 2D voire 3D, qui va s'adresser aux capacités de perception visuelle de l'utilisateur.

Possibilité de représenter avec des couleurs différentes selon la ou les classes constitutives de l'empreinte relationnelle.

Un mode de mise en œuvre de l'invention comme procédé d'authentification visuelle d'une image candidate par rapport à une image authentique se caractérise en ce qu'il comprend les étapes suivantes:
- mise en œuvre du procédé de détermination d'une empreinte relationnelle avec l'image authentique en tant que première image et l'image candidate en tant que deuxième image, ou réciproquement,
- présentation visuelle, graphique, d'une ou plusieurs classes de vecteurs de similarité constitutives de l'empreinte relationnelle, sur l'une des deux images mises en œuvre,
- conclusion à l'authenticité au moins partielle ou régionale de l'image candidate relativement à l'image authentique, en cas d'observation d'au moins une région régulière dans la visualisation issue de l'empreinte relationnelle déterminée.

La phase de vérification visuelle peut comprendre préalablement à l'étape de présentation, une étape de recherche d'une image authentique à comparer avec l'image candidate. Cette étape peut être une étape de détermination de la signature relationnelle de l'image candidate suivi d'un envoi de la signature relationnelle déterminée à un serveur qui en réponse à cet envoi et sur la base de la signature relationnelle adresse automatiquement au dispositif électronique de vérification une ou plusieurs images d'authentification à utiliser pour l'étape de présentation. Le serveur comprendra alors une base d'images d'authentification indexées sur la base d'une signature relationnelle et éventuellement d'un identifiant de sujets à authentifier. La vérification peut alors consister à comparer quantitativement la signature extraite du sujet candidat soit à la signature pointée en référence dans la base de données (authentification un contre un), soit à un sous-ensemble de n signatures identifiées dans la base de données (n petit, typiquement de l'ordre de 1 à 10) comme les signatures les plus proches et/ou les sujets authentiques les plus probables (identification 1 contre n), les images d'authentification correspondantes pouvant alors être soumises à la reconnaissance visuelle de l'opérateur ou transmises comme telles pour exécution par l'opérateur du procédé objet de l'invention.

Un prolongement de l'utilisation décrite précédemment consiste en ce que:
- l'image support sur laquelle la visualisation d'une ou plusieurs classes de vecteurs de similarité constitutives de l'empreinte relationnelle est appliquée, est constituée de la fusion (blending selon canal alpha) des images candidate et authentique,
- les images sont mises en œuvre de telle façon qu'elles peuvent faire apparaître un effet de type Glass si elles sont au moins partiellement.

On donne ainsi à un utilisateur une assistance supplémentaire particulièrement appréciable quand le phénomène de type Glass n'est pas assez franc ou encore que l'utilisateur n'est pas suffisamment sensibilisé à sa détection.

Un autre mode d'utilisation du procédé de l'invention comme procédé d'authentification d'une image candidate par rapport à une image authentique, passe par une nature autre que visuelle pour le stimulus relationnel et contient les étapes suivantes :
- a- ENREGISTREMENT :
   - détermination d'une empreinte relationnelle entre l'image authentique et une image de référence choisie,
   - détermination d'un stimulus relationnel, à partir de l'empreinte relationnelle, s'adressant à au moins un type de perception choisi, entre l'image authentique et une image de référence choisie,
   - mise en œuvre d'un contenu support compatible avec le type de perception choisi, reconnaissable ou intelligible par l'utilisateur,
   - modulation du contenu support avec tout ou partie du stimulus relationnel, le résultat de la modulation étant en général peu ou pas reconnaissable ou intelligible par l'utilisateur,
   - enregistrement du résultat de la modulation du contenu support et le cas échéant indexation avec l'image authentique et/ou l'image de référence choisie, accompagné le cas échéant du type de perception choisi.
- b- CONTRÔLE :
   - détermination d'une empreinte relationnelle entre l'image candidate et l'image de référence choisie,
   - détermination d'un stimulus relationnel, à partir de l'empreinte relationnelle, s'adressant au même type de perception que celui utilisé avec l'image authentique lors de son enregistrement, entre l'image candidate et une image de référence choisie,
   - mise en œuvre du résultat de la modulation correspondant à l'image authentique,
   - tentative de dé-modulation du résultat de la modulation avec tout ou partie du stimulus relationnel déterminé à partir de l'image candidate,
   - conclusion à l'authenticité de l'image candidate par rapport à l'image authentique en cas de perception claire ou intelligible par l'utilisateur d'une partie au moins du contenu support démodulé par l'image candidate.

L'invention concerne, par ailleurs, un procédé d'authentification unitaire de chaque sujet matériel d'un ensemble de sujets matériels caractérisé en ce qu'il consiste pour chaque sujet de l'ensemble, à :
- mettre en œuvre le procédé de détermination d'une empreinte relationnelle tel que décrit précédemment entre une image authentique du sujet matériel et une image de référence, et
- enregistrer l'empreinte relationnelle, calculée en association avec une image authentique dudit sujet matériel,
- lors de l'authentification d'un sujet matériel mettre en œuvre le procédé d'authentification selon l'invention.

Il est tout à fait envisageable d'utiliser une signature relationnelle qui est mise en œuvre en lieu et place d'une empreinte relationnelle.

L'authentification peut être réalisée par le biais d'un stimulus relationnel et peut faire appel aux fonctions cognitives humaines, en particulier en mettant en œuvre une des mémoires de l'utilisateur.

On peut aussi prévoir que les étapes précédemment décrites puissent être mises en œuvre de manière répétées ou successives par un utilisateur qui interagit de manière préférée par le toucher et/ou la parole et/ou la vision avec un appareil de manière temporelle et/ou spatiale. On peut alors créer des effets en temps réel, ludiques permettant d'affiner sa prise de décision et/ou d'établir le lien entre deux images, deux produits, un utilisateur et un produit, sous couvert d'une action qui a priori n'a rien à voir.

L'utilisation d'un terminal de type smartphone ou tablette tactile ou ordinateur portable paraît particulièrement pertinente pour cette interaction, via une Application/un programme informatique dédié, qui permettrait à l'utilisateur de tirer un profit de cette application et à son éditeur de gagner en connaissance à propos de cet utilisateur, de son réseau, etc... via des données captées ou présentes dans le terminal.

L'invention concerne également un dispositif électronique susceptible d'être utilisé pour l'une ou l'autre des formes de mise en œuvre du procédé d'authentification selon l'invention notamment pour la phase de vérification. De manière préférée mais non strictement nécessaire le dispositif électronique comprend un écran de visualisation tactile et se trouve adapté pour permettre une modification du grandissement de visualisation de l'image d'authentification et/ou de l'image de vérification par le déplacement de deux points de contact sur l'écran tactile. L'écran tactile peut également être mis à profit pour assurer la commande du déplacement relatif des images mises en œuvre.

De nombreux schémas de mise en œuvre de la présente invention son possibles, particulièrement dans l'environnement sécurité et marketing, et peuvent intégrer aussi la reconnaissance de la famille de produit, des codes à barres 1D ou 2D ou autre, être couplé à des puces NFC ou RFID.

L'invention est susceptible de trouver des applications dans différents domaines comme par exemple dans un processus de traçabilité d'une chaîne logistique au sein de laquelle les différents intervenants : producteur, distributeur, revendeur, consommateur sont tous intéressés par le contrôle de l'authenticité avec des moyens financiers et techniques à leur dispositions différents pour assurer ce contrôle. Un producteur titulaire de droits de propriété intellectuelle peut ainsi être intéressé par savoir si un produit contrôlé est au bon endroit dans la chaîne logistique (contrôle des marchés parallèles) alors qu'un consommateur se préoccupe d'abord de savoir si le produit en question est bien authentique ou s'il peut bénéficier de conseils, d'avantages liés à un produit authentique. Tout cela peut être mis en œuvre comme indiqué précédemment avec recours conjoint à un moyen d'authentification unitaire (signature relationnelle et/ou identifiant) automatique et un moyen d'authentification sensorielle comme décrit dans cette invention.

L'invention peut être mise en œuvre dans le cadre de diverses applications d'authentification, d'identification, de contrôle d'intégrité et de cryptographie visuelle. A cet égard, il faut considérer que dans le cadre de l'invention, les termes "authentification", "identification" et "contrôle d'intégrité" peuvent être équivalents en fonction de l'application envisagée.

Une utilisation importante de l'empreinte relationnelle est lorsque l'on calcule selon le procédé de l'invention une empreinte relationnelle d'une image d'un sujet matériel par rapport à une image de référence, et que tout ou partie de cette empreinte relationnelle est utilisée pour recaler l'image du sujet matériel par rapport à l'image de référence. En général cela est réalisé préalablement à la détermination d'une signature relationnelle ou encore d'un stimulus relationnel.

Ce mode préféré, peut être mis en œuvre pour un ensemble d'images provenant d'un ensemble de sujets matériels, et le recalage ainsi opéré automatiquement selon une même image de référence. L'utilisation d'indicateurs de similarité de type détecteurs/descripteurs tels que SIFT, SURF, ORB ou A-KAZE peut être particulièrement intéressant pour ce faire.

Il est possible aussi d'utiliser des classes distinctes de vecteurs de similarité présent dans une empreinte relationnelle, pour d'une part recaler des images issues d'un sujet matériel, mais aussi calculer une ou plusieurs signatures relationnelles et/ou encore un ou plusieurs stimulus relationnels.

La présente invention permet aussi de réaliser des contrôles d'intégrité, en particulier en utilisant une authentification visuelle entre une image candidate et une image authentique issues supposément d'un même sujet matériel ou d'un sujet matériel appartenant à une même famille. Si ceux régions comparées sont intègres, alors apparaîtra une régularité dans au moins un champ de vecteurs de similarité correspondant à ces régions, sans discontinuité majeure, alors que si une partie de ces régions a subi une modification, alors en cet endroit doivent apparaître des dissimilarités, traduite par la présence d'une irrégularité du champ localement.

Parmi, les sujets matériels comprenant une région d'authentification apte à la mise en œuvre du procédé d'authentification selon l'invention il est possible de citer notamment : les papiers et emballages cartons ; les matériaux fibreux ; les matériaux frittés métalliques, plastiques, céramiques ou autres ; les matériaux alvéolaires ou cellulaires ; les cuirs y compris les galuchats ; le bois ; les métaux notamment usinés, frappés, moulés, injectés ou laminés ; les matières plastiques ; le caoutchouc ; les textiles tissés ou non tissés (avec dé-tramage éventuel) ; certains pelages ou plumages ; les images de scènes naturelles comme images de paysage, images de constructions, images de murs ou de chaussées ; les empreintes biométriques, la peau et les empreintes digitales, l'iris d'un œil ; les œuvres d'art ; les produits ou matériaux pulvérulents sans que cette liste ne soit ni limitative, ni exhaustive.

Bien entendu, les différentes caractéristiques, variantes et formes de mise en œuvre du procédé selon l'invention peuvent être associées les unes avec les autres selon diverses combinaisons dans la mesure où elles ne sont pas incompatibles ou exclusives les unes des autres.

Différents aspects de l'invention ressortent de la description ci-dessous effectuée en référence aux figures annexées qui illustrent des exemples non limitatifs de mise en œuvre de l'invention.
- La figure 1 explicite des modes de calcul de vecteurs de similarité à un rang donné,
- La figure 2 montre un exemple d'un champ de vecteurs de similarité obtenu dans le cadre d'une mise en œuvre du procédé selon l'invention,
- La figure 3 montre un autre exemple d'un champ de vecteurs de similarité obtenu dans le cadre d'une mise en œuvre du procédé selon l'invention,
- La figure 4 représente un champ de vecteurs d'empreinte résultant de la superposition de champs de vecteurs de similarité,
- La figure 5 représente un autre champ de vecteurs d'empreinte ou similarité résultant de la mise en œuvre en tant d'images de sujet formés par une feuille de papier,
- La figure 6 illustre une représentation de l'empreinte relationnelle illustrée à la figure 5
- La figure 7 illustre la distribution angulaire d'une classe désordonnée et d'une classe régulière de vecteurs de similarité du champ de vecteur d'empreinte de la figure 5,
- La figure 8 illustre une méthode de codage binaire ou quaternaire d'un vecteur de similarité d'une empreinte relationnelle,
- La figure 9 illustre des résultats statistiques obtenus par codage binaire d'empreintes relationnelles formant ainsi des signatures relationnelles,
- La figure 10 illustre un codage quaternaire selon la rose des vents d'une empreinte relationnelle selon l'invention,
- La figure 11 explicite un schéma de type cryptographie visuelle construit à partir d'une signature relationnelle selon l'invention,
- La figure 12 illustre un autre schéma de type cryptographie visuelle avec image de vérification d'intégrité par un tiers de confiance à partir d'une signature relationnelle quaternaire,
- La figure 13 illustre deux cas de stimulus relationnel (ici visuel) résultant du conditionnement cognitif d'une empreinte relationnelle selon l'invention,
- La figure 14 illustre un autre type de stimulus relationnel sous forme graphique de segments colorés,
- La figure 15 illustre une application de contrôle d'intégrité d'un motif imprimé,
- La figure 16 illustre un mode d'authentification biométrique par la présentation visuelle de l'empreinte relationnelle entre deux acquisitions d'empreintes de peau différentes,

Au sens de l'invention la similarité entre une première image et une deuxième image ou entre des parties de ces images est évaluée à l'aide d'un indicateur de similarité donnant une valeur positive d'autant plus importante que la première image et la deuxième image, ou leurs parties respectives, sont similaires. La méthode du coefficient de corrélation standardisé (au sens statistique) constitue un indicateur de similarité préférée pour l'invention. Les méthodes d'indicateurs de corrélation en général tel que l'indicateur de corrélation par différence sont des exemples d'autres d'indicateurs de similarité. L'inverse d'une distance ou d'une divergence (au sens mathématique) entre les images ou leurs parties constituent encore d'autres familles d'indicateurs de similarité possibles.

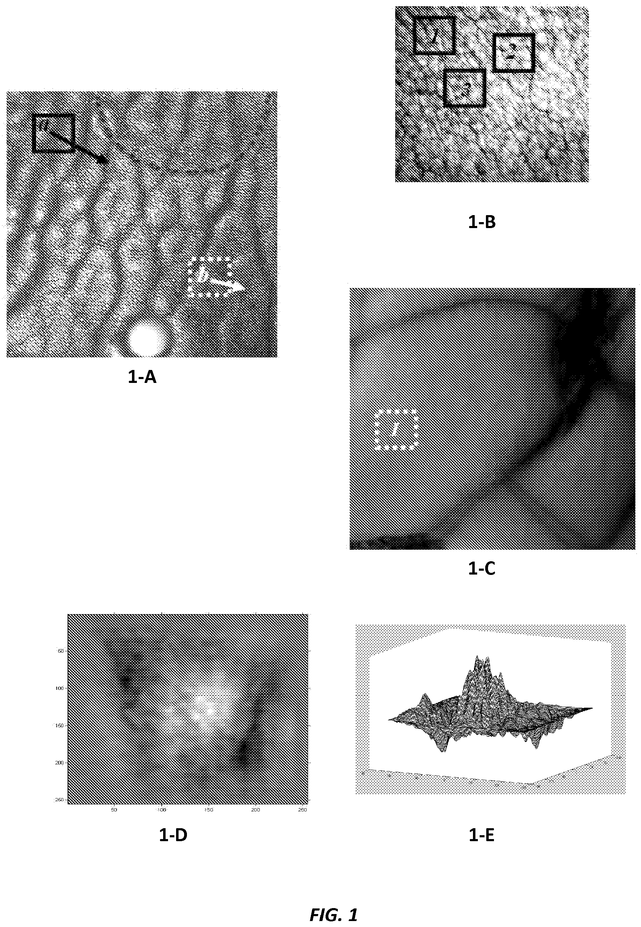

Ainsi, différentes méthodes de calcul peuvent être mises en œuvre. A titre indicatif et non limitatif, la figure 1 montre un premier exemple de calcul d'un vecteur de similarité selon le coefficient de corrélation centré standard (en tant qu'indicateur de similarité) au rang 2 en mettant en œuvre en tant que première image 1-A l'image, ayant une dimension 1637x1601, d'un sac en cuir. Dans ce contexte le sac de cuir est le sujet matériel.

Selon ce premier exemple la deuxième image 1-B de dimension 768x825, est une image d'une portion d'emballage en mousse semi-rigide. Il est calculé un indice de similarité entre un pavé de référence de la première image 1-A, et des pavés d'inspection 1, 2 et 3 de dimension128x128 de la deuxième image 1-B. Les valeurs du coefficient de corrélation centré standard obtenues (en tant qu'indices de similarité) sont respectivement -0.029 (pavé 1), -0.050 (pavé 2) et 0.032 (pavé 3). En ordonnant par ordre croissant les valeurs absolues de ces indices de similarité, le rang 1 correspond au pavé 2, le rang 2 au pavé 3 et le rang 3 au pavé 2. Le vecteur de similarité au rang 2 appliqué au point de référence, centre du pavé de référence a, pointe alors vers le centre du pavé de concordance au rang 2, ici le centre du pavé 3 étant considéré que les coordonnées de ces deux centres sont déterminées dans un même repère orthonormé et la norme du vecteur de similarité est normalisée à 1.

La figure 1 montre également un deuxième exemple de calcul d'un vecteur de similarité selon le coefficient de corrélation centré standardisé (en tant qu'indicateur de similarité) en mettant en œuvre en tant que première image, la même image 1-A et en tant que deuxième image 2-C une image de céramique de dimension 1142x1162. Le pavé de référence b est alors comparé successivement à chacun d'une série de pavés d'inspection correspondant au pavé / de dimension 128x128 translaté de un pixel par un pixel. Les valeurs du coefficient de corrélation centré standardisé obtenues (en tant qu'indices de similarité) constituent une figure de corrélation 255x255 présentant des extrema locaux de différents rangs représentée sous la forme d'une image 1-D à niveaux de gris ou d'une surface de niveau de gris 1-E. Le vecteur de similarité au rang 2 appliqué au point de référence, centre du pavé de référence b, pointe alors vers le centre du pavé de concordance offrant le maxima local de rang 2 parmi les valeurs du coefficient de corrélation calculé (indices de similarité).

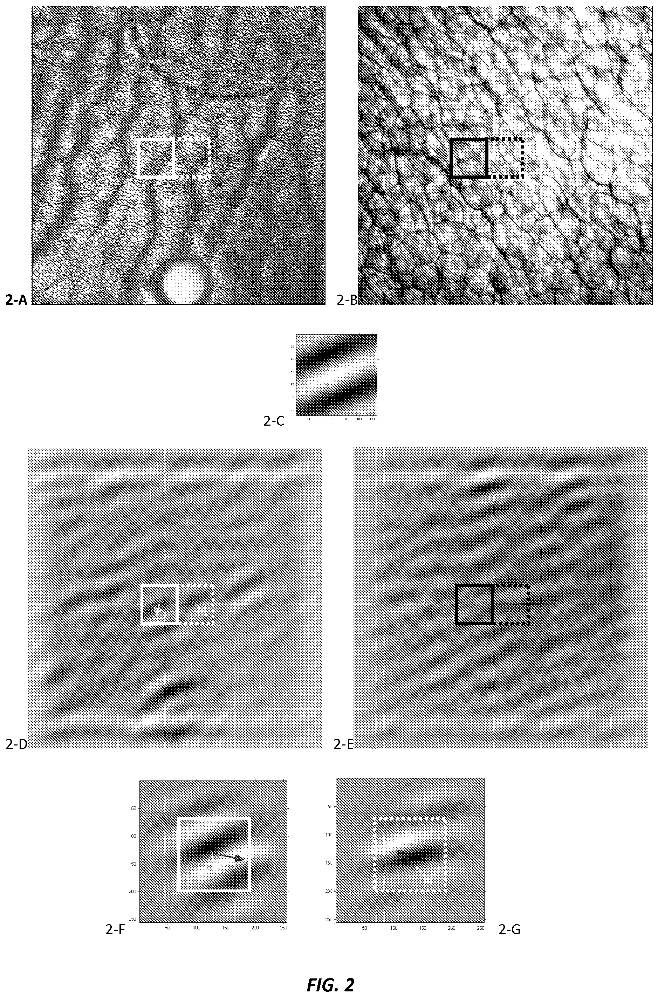

Selon un troisième exemple de mise en œuvre de l'invention illustré figure 2, les vecteurs de similarité sont calculés selon le coefficient de corrélation centré standardisé (en tant qu'indicateur de similarité) sur l'image sujet d'un élément de sac en cuir 2-A et l'image de référence d'un élément d'emballage en mousse semi-rigide 2-B après filtrage des images au moyen d'un filtre passe-bande (ici la partie réelle d'une ondelette de Gabor) 2-C entre le pavé de référence 128x128 et la portion d'inspection 128x128 en traits pleins, respectivement en traits pointillés, extraits des images filtrées 2-D et 2-E. Les vecteurs de similarité au rang 2 (respectivement au rang 1) associés aux maxima locaux secondaires (respectivement primaires) des figures de corrélation sont indiqués en blanc (respectivement en noir) dans les figures de corrélation correspondantes 2-F en traits pleins et 2-G en traits pointillés.

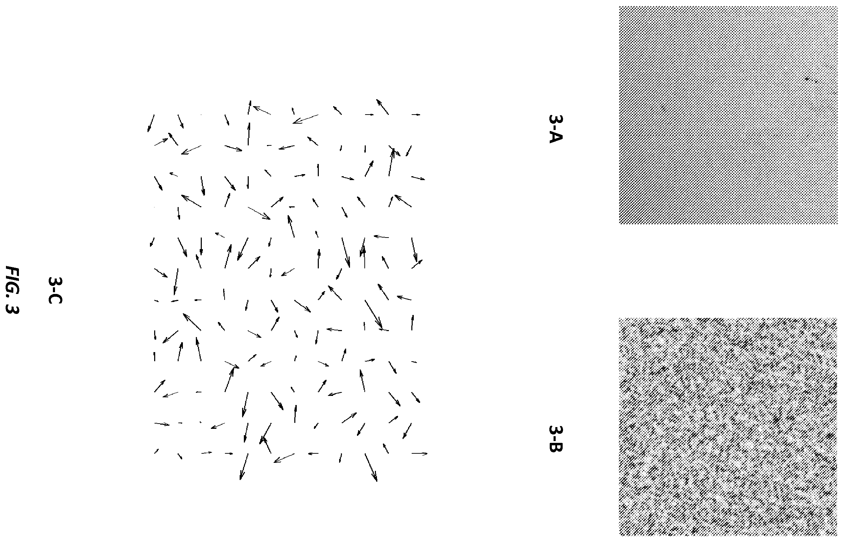

Selon un quatrième exemple de mise en œuvre de l'invention illustré figure 3, il est utilisé en tant que première image 3-A une image d'un sujet de verre dépoli, de dimension 384x384, acquise en réflexion sous éclairage diffus. Il est utilisé pour ce deuxième exemple en tant que deuxième image ou image de référence une image de même taille 3-B synthétisée par réaction-diffusion à partir d'une graine. L'image 3-C montre un champ de vecteurs de similarité au rang 1calculé en utilisant la corrélation centrée standardisée au rang 1 en tant qu'indicateur de similarité et en comparant des pavés de référence de l'image 3-A de taille 32x32 centrés chacun sur un nœud d'une grille régulière de pas 32x32 à des pavés d'inspection de taille 32x32 de l'image 3-B. Chaque vecteur de similarité est alors appliqué au centre d'un pavé de référence et dirigé vers le centre du pavé d'inspection présentant le coefficient de similarité le plus grand avec ledit pavé de référence. La norme de chaque vecteur de similarité correspond à la valeur dudit coefficient de similarité, étant considéré que les coordonnées de ces deux centres sont déterminées dans un même repère orthonormé.

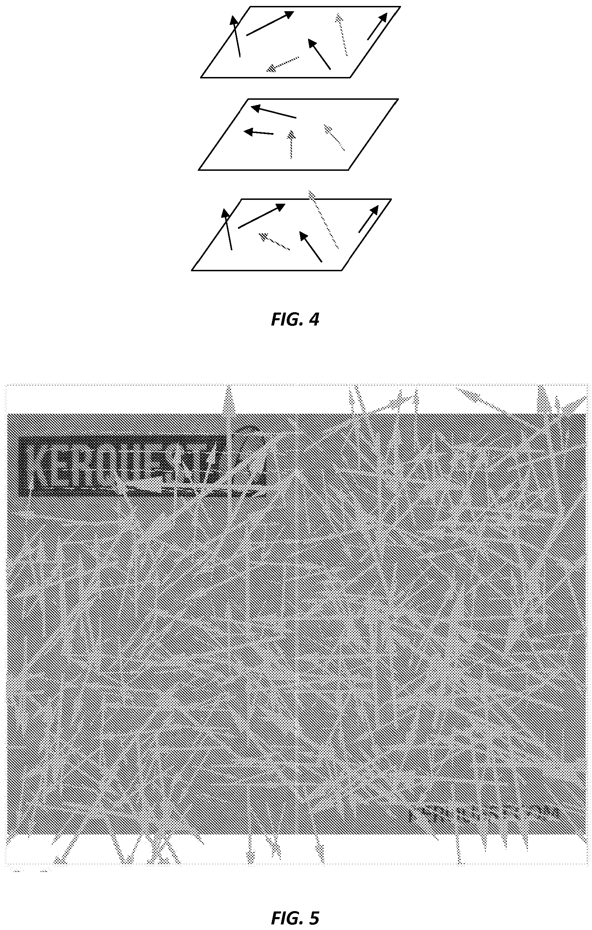

La figure 4 montre un champ de vecteurs d'empreinte (en bas) formé par la superposition d'un champ de vecteurs de similarité calculé selon une grille régulière par une première méthode au rang k (en haut) et d'un champ de vecteurs de similarité calculé selon des points d'intérêts par une autre méthode au rang I (au milieu). Chacun des vecteurs de similarité est reporté en son point d'application dans le champ de vecteurs d'empreinte et sommé vectoriellement le cas échéant avec les vecteurs de similarité qui s'appliquent en ce même point.

La figure 5 illustre la représentation graphique, formant un champ de vecteurs d'empreinte, d'un champ de vecteurs de similarité au rang 1 qui est obtenu par la comparaison d'une première image dont le sujet est un premier document papier à motif imprimé avec une deuxième image ou image de référence dont le sujet est un deuxième document à même motif imprimé mais distinct du premier. Le champ de vecteurs de similarité est calculé par corrélation de pavés de référence et portions d'inspection, centrés sur les nœuds d'une grille de référence64x64, avec interpolation du pic de corrélation au voisinage des maxima maximorum.

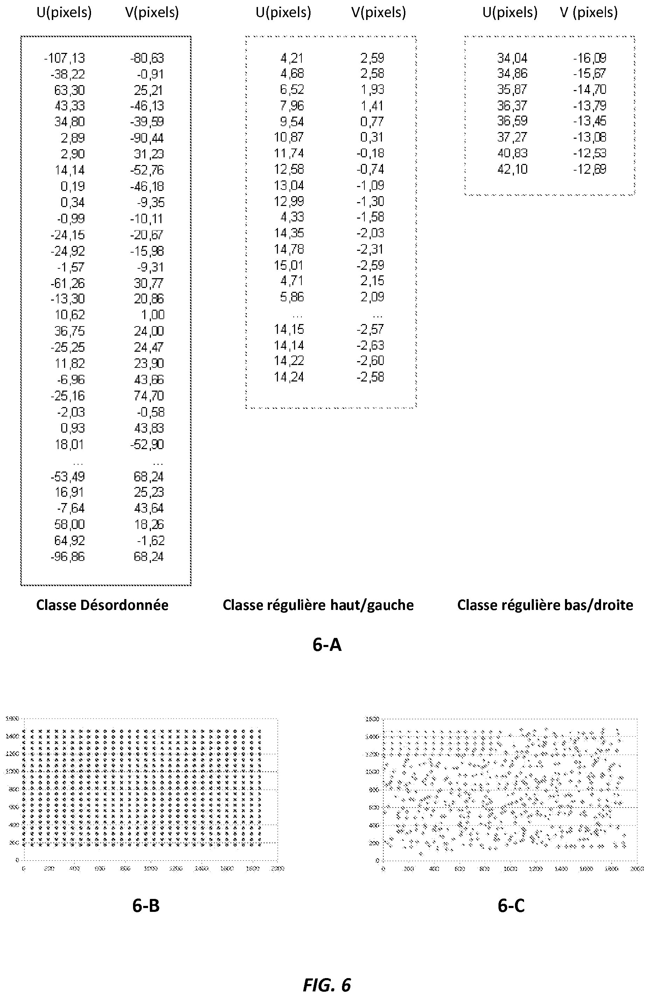

La figure 6 illustre une représentation de l'empreinte relationnelle extraite de la figure 5, où son listées (Fig. 6-A) en pixels les coordonnées u et v de chacun des vecteurs de similarité dont les points d'application (de référence) sont répartis selon une grille régulière (Fig. 6-B) de pas64x64 et commençant à x=0 et y=175 pour terminer à x=1856 et y=1455, selon trois classes de vecteurs de similarité après utilisation d'un critère entropique (voir la figure 7) : la classe désordonnée qui occupe la majeure partie de la figure 5, puis deux classes régulières correspondant aux zones à motif imprimé, respectivement en haut à gauche et en bas à droite. Le graphe (Fig. 6C) correspondant au calcul des points (x+u, y+v), sans application de facteur d'échelle pour la visualisation comme employé pour les vecteurs la figure 5, qui permet elle aussi de noter en un coup d'œil les 3 classes précédemment mentionnées. A noter que les pas de la grille utiliser (x,y) peuvent être sauvegardés dans un fichier de paramètres associés, ou encore au choix dans l'empreinte relationnelle elle-même.

La figure 7 illustre la distribution angulaire de la classe désordonnée et d'une classe régulière telles que mentionnées précédemment, obtenues par l'utilisation d'un critère entropique de type histogramme de la distribution angulaire des vecteurs de similarité dans un voisinage 1x5 autour de chaque vecteur de similarité (ici les deux vecteurs de similarité alignés de part et d'autre du vecteur de similarité considéré, hors effet de bord). Le cercle trigonométrique est séparé en 8 secteurs angulaires de 45 degrés chacun, et la distribution analysée selon que les angles des vecteurs de similarités du voisinage appartiennent à tel ou tel secteur angulaire. Comme seuil on considère que si au moins trois secteurs sur les 8 disponibles sont activés pour un même voisinage, alors le vecteur central doit faire partie de la classe désordonnée ; sinon, il fera partie de la classe de vecteurs de similarité ordonnée.

La figure 8 illustre une méthode de codage binaire ou quaternaire d'un vecteur de similarité de l'empreinte relationnelle. Selon l'orientation du vecteur de similarité, on pourra lui donner en quaternaire la valeur de la rose des vents Nord-Ouest, Sud-Ouest, Nord-Est ou Sud-Est. En binaire on considèrera qu'un vecteur orienté Nord-Ouest ou Sud-Est indifféremment prendra la valeur « 1 », et s'il est orienté Nord-Est ou Sud-Ouest indifféremment prendra la valeur « 0 », ou inversement.

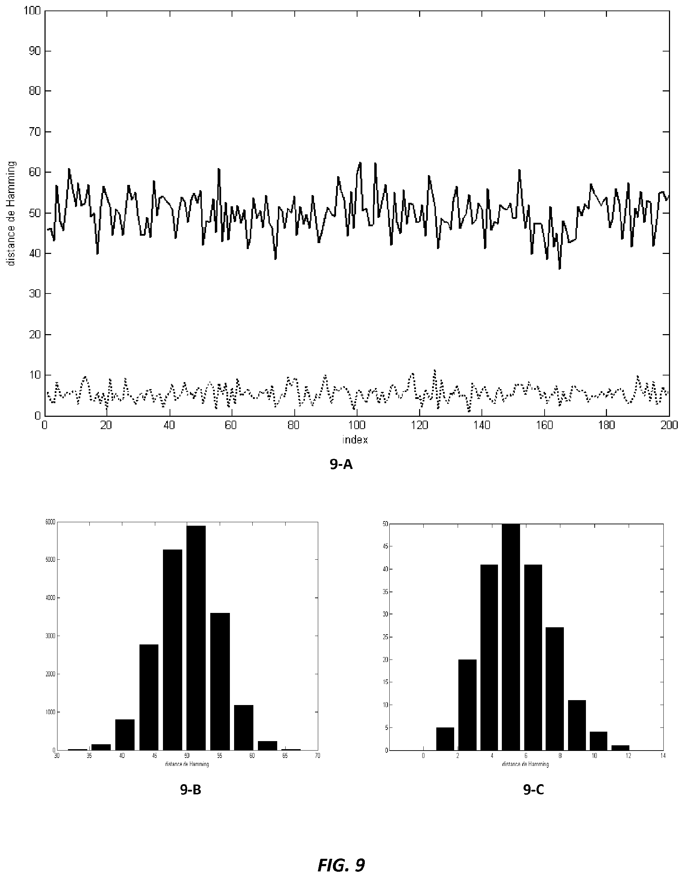

La figure 9 illustre des résultats statistiques obtenus par codage binaire d'empreintes relationnelles formant ainsi des signatures relationnelles.

Afin d'établir ces résultats, les empreintes relationnelles de 200 feuilles de papier appartenant à une même ramette ont été imagées sur un élément de l'ordre du cm². Chacune des empreintes relationnelles est formée d'un champ de vecteurs de similarité au rang 1 calculé par corrélation entre des pavés de référence successifs et des portions d'inspection de 64x64 pixels selon une grille régulière de nœuds de pas 24x24 pixels, entre une image sujet centrée normalisée par son écart-type et l'image complément à 1 comme image de référence (inversion de l'image sujet au sens de l'analyse d'images). Pour chaque empreinte relationnelle, les 11 x 15 vecteurs de similarité font l'objet d'un codage binaire tel que décrit précédemment, les 165 bits résultants étant concaténés pour former la signature relationnelle.

Le graphique 9-A représente la distance de Hamming calculée sur 200 paires de signatures relationnelles (de 165 bits chacune) déduites d'acquisitions des mêmes éléments de papier (entrait pointillé), et la distance de Hamming calculée sur 200 paires de signatures relationnelles (de 165 bits chacune) déduites d'acquisitions d'éléments de papier différents (en trait plein).Le graphique 9-B représente l'histogramme des distances de Hamming entre signatures relationnelles déduites d'acquisitions d'éléments de papier différents. La distance moyenne est de (49.99 +/- 4.66) %. Ces statistiques démontrent la bonne discrimination potentielle d'éléments de papiers différents ou identiques par le procédé proposé.

Le graphique 9-C représente l'histogramme des distances de Hamming entre signatures relationnelles déduites d'acquisitions de mêmes éléments de papier. La distance moyenne est de (45 +/- 1.97) %.

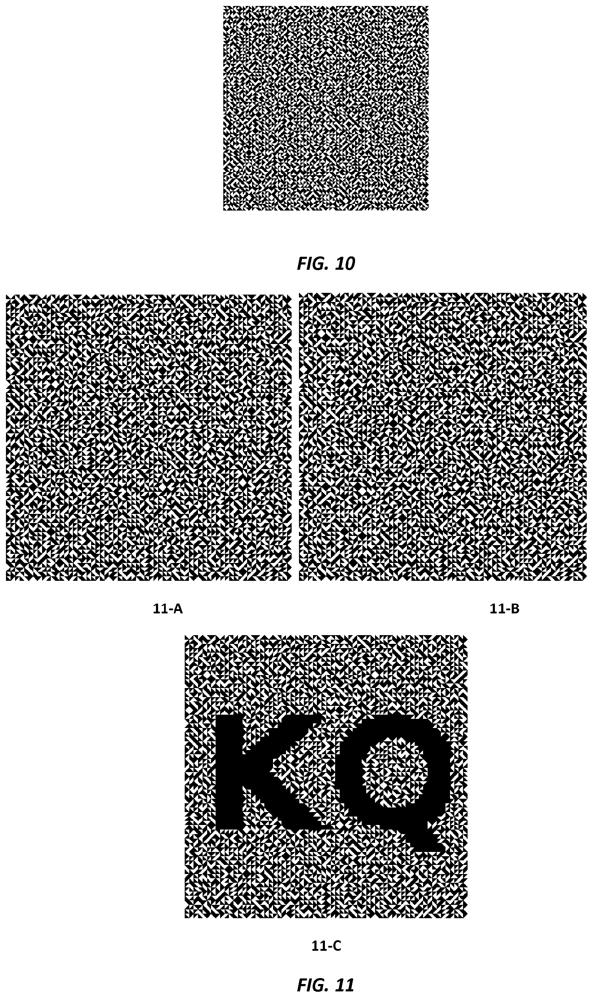

La figure 10 illustre un codage quaternaire selon la rose des vents d'une empreinte relationnelle d'une image sujet relativement à une image de référence, en associant bijectivement aux directions SO,SE,NE,NO de la rose des vents des triangles isocèles orientés.

La figure 11 explicite un schéma de type cryptographie visuelle construit à partir d'une signature relationnelle quaternaire. Construction d'une image partagée 211-B de type cryptographie visuelle d'une image message (binaire) à partir de la signature relationnelle de la figure précédente 11-A assimilée à une image partagée 1, de la façon suivante : si la valeur du bit courant du message (binaire) est 1 (resp. 0), le triangle correspondant dans l'image 2 est choisi de façon à former un carré (resp. un triangle) par réunion avec le triangle courant de l'image partagée 1.

L'image résultant de la superposition / empilement des deux images partagées précédentes révèle le message 11-C.

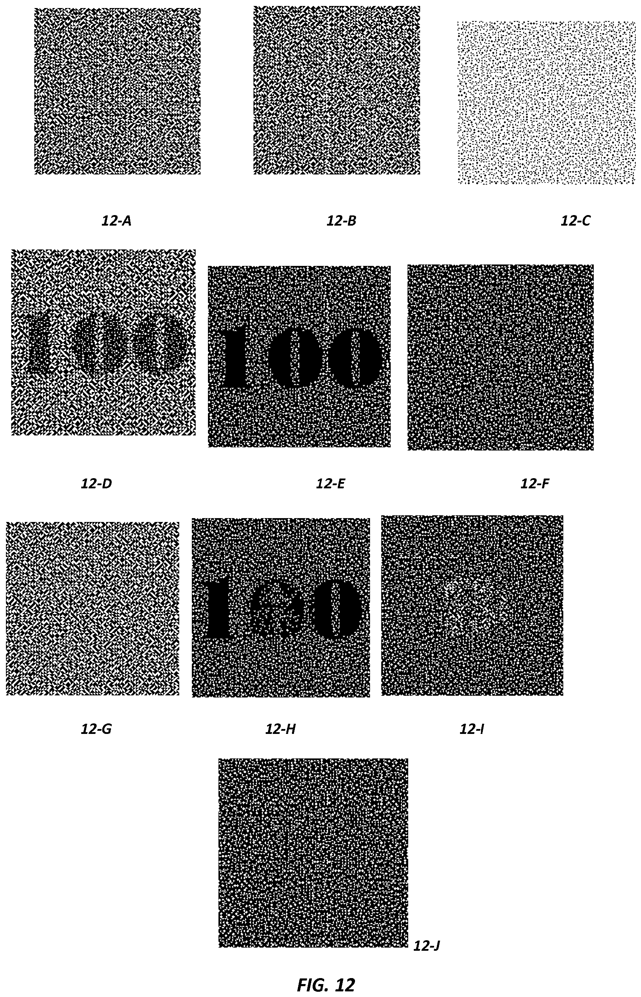

La figure 12 illustre un autre schéma de type cryptographie visuelle avec image de vérification d'intégrité par un tiers de confiance à partir d'une signature relationnelle quaternaire.

La vignette 12-A illustre la signature relationnelle servant d'image partagée 1. La vignette 12-B représente l'image partagée 2. La vignette 12-C est l'image de vérification d'intégrité (détenue par un tiers de confiance). La vignette 12-D correspond à l'image après superposition des images partagées 1 et 2, la vignette 12-E à l'image après superposition de l'image de vérification et des images partagées 1 et 2. La vignette 12-F montre l'image après superposition de l'image de vérification et de l'image partagée 2. La vignette 12-Greprésente le résultat en cas de manipulation frauduleuse de l'image partagée 2 (changement d'un « 0 » en « 8 » ... en lieu et place ..) La vignette 12-H représente l'image après superposition de l'image de vérification et des images partagées 1 et 2 attaquée, 12-I image après superposition de l'image de vérification et de l'image partagée 2 attaquée : on voit des anomalies à l'endroit de l'attaque. La vignette 12-J est l'image après superposition de l'image de vérification et de l'image partagée 1 non-attaquée : on ne voit aucune anomalie sur l'ensemble de l'image.

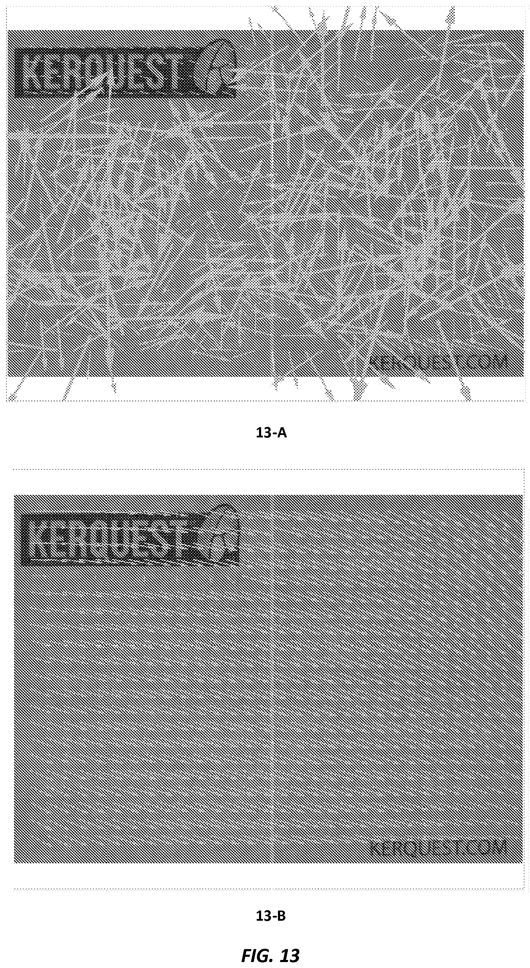

La figure 13 illustre deux cas de stimulus relationnel (ici visuel) résultant du conditionnement cognitif de l'empreinte relationnelle.

L'image 13-A montre un stimulus relationnel visuel sous forme graphique de flèches des classes désordonnée et régulière de l'empreinte relationnelle de l'image d'un document papier à motif imprimé relativement à l'image d'un document papier différent mais à même motif imprimé (empreinte relationnelle d'un champ de vecteurs d'empreinte calculé en utilisant comme indicateur de similarité l'inter-corrélation au rang 1, les points de référence étant les nœuds d'une grille régulière). Cela nous montre une région désordonnée i.e. une région où les vecteurs de similarité sont désordonnés. Cette région correspond à la région où seule la microstructure du papier est visible sur les deux échantillons. Deux régions régulières comprenant des vecteurs de similarité réguliers apparaissent quant à elles sur les zones imprimées en haut à gauche et bas à droite de l'image. Si un des deux échantillons est authentique, alors on authentifie le motif imprimé d'une part sur le second (aux modulations par la matière près), mais nullement les microstructures du second, donc il s'agit d'un candidat différent de l'authentique d'un point de vue matière constitutive. L'image support dans ce cas est un des deux échantillons mis en œuvre dans le procédé.

L'image 13-B montre également un stimulus relationnel visuel sous forme graphique mais entre deux acquisitions d'un même document papier à motif imprimé. Cela nous montre des vecteurs de similarité réguliers, entre deux images identiques (aux distorsions près induites par la prise de mesure (manuelle dans ce cas)) d'un même échantillon papier. Si l'un des deux échantillons est authentique, alors on authentifie et le motif imprimé d'une part sur le second, mais encore les microstructures du second, donc il s'agit de l'authentique d'un point de vue matière constitutive.

La figure 14 illustre un autre type de stimulus relationnel sous forme graphique de segments colorés ou en niveau gris. Sur l'image 14-A on voit une représentation des vecteurs de similarité de l'empreinte relationnelle de l'image d'un document papier à motif imprimé relativement à l'image d'un document papier différent mais à même motif imprimé (empreinte relationnelle d'un champ de vecteurs d'empreinte calculé en utilisant comme indicateur de similarité le détecteur/descripteur A-KAZE, après filtrage passe-bande des images). Chacun des segments du conditionnement cognitif joint un point de référence caractéristique détecté dans l'image sujet à son homologue dans l'image de référence sur l'image obtenue en concaténant les deux images précédentes. Cela nous montre que, dans cette autre forme de représentation, deux échantillons différents produisent des mises en relation de points similaires uniquement sur les zones imprimées en haut à gauche et bas à droite de l'image, et a contrario rien à l'endroit où seule la microstructure du papier est visible sur les deux échantillons. L'image support dans ce cas est une juxtaposition des échantillons.

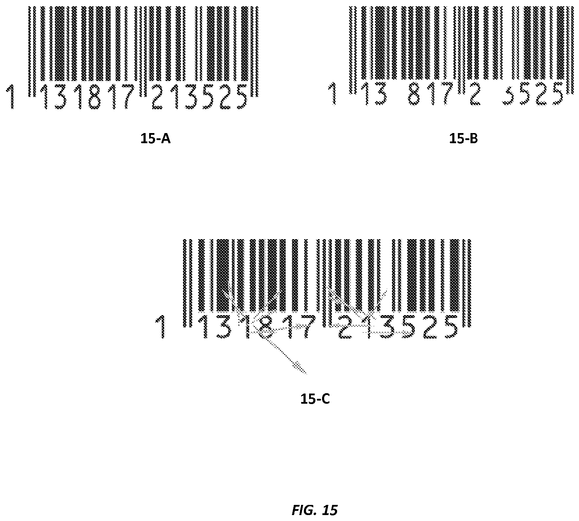

Sur l'image 14-B on voit une représentation similaire mais entre deux acquisitions d'un même document papier à motif imprimé. Cela nous montre que deux échantillons identiques produisent des mises en relation de points similaires réparties sur l'ensemble des échantillons (partie imprimée et partie issue de la microstructure) et en nombre très grand par rapport au cas précédent (de l'ordre de 10 à 20 fois plus que précédemment). La figure 15 illustre une application de contrôle d'intégrité d'un motif imprimé. Dans ce contrôle, la présentation visuelle de l'empreinte relationnelle indique des zones de non-similarité traduites par l'apparition prépondérante locale de vecteurs de similarité désordonnés. L'empreinte relationnelle a été obtenue en utilisant comme indicateur de similarité l'inter-corrélation et le rang 1, les points de référence étant issus d'une grille régulière. L'image support dans ce cas est l'image originale mis en œuvre dans le procédé. Selon cette application la vignette 15-A correspond à l'Image originale, la vignette 15-B représente l'mage modifiée tandis que la vignette 15-C est une présentation visuelle de l'empreinte relationnelle résultant de la comparaison de ces deux images.

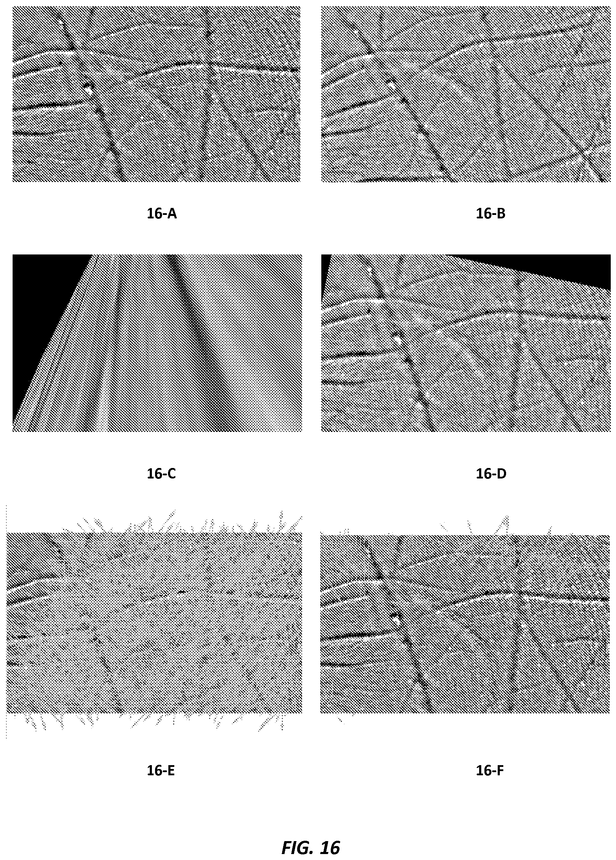

La figure 16 illustre un mode d'authentification biométrique par la présentation visuelle de l'empreinte relationnelle entre deux acquisitions d'empreintes de peau différentes et une acquisition de référence authentique. Cette dernière a été obtenue en utilisant comme indicateur de similarité l'inter-corrélation et le rang 1, les points de référence étant issus d'une grille régulière, et un recalage par une méthode de détecteur/descripteur des images candidates par rapport à l'image originale a eu lieu avant le calcul des vecteurs de similarité.

Cela nous montre que deux empreintes différentes produisent un champ de vecteurs de similarité largement désordonné (à gauche cas image candidate 2 vs image originale) alors que des champs de vecteurs de similarité réguliers et de petites dimensions apparaissent quant à eux (à droite cas image candidate 1 vs image originale) lorsque deux empreintes ont une région d'authentification commune. A noter que la frontière entre les zones grises et les zones noires des images recalées apparaît aussi sur ces vecteurs de similarité, à l'image de ce qui a été dit dans l'application contrôle d'intégrité. L'image support dans ce cas est l'image originale mise en œuvre dans le procédé.

Il est à noter que l'image « recalée » pourrait être une représentation visuelle pertinente au sens de l'invention en ce qu'elle n'est plus assimilable à une image de type peau dans le cas 2, alors que l'on reconnaît toujours le micro-texture caractéristique d'empreinte digitale dans l'acquisition 1.
A la figure 16, la vignette 16-A montre l'Image originale authentique, la vignette 16-B représente l'image candidate 1 brute, la vignette 16-C illustre Image candidate 2 « recalée, la vignette 16-D correspond à l'mage candidate 1 recalée, la vignette 16-E est une présentation visuelle de l'image 2 comparée à l'image originale tandis que la vignette 16-F est présentation visuelle image 1 comparée à l'image originale.

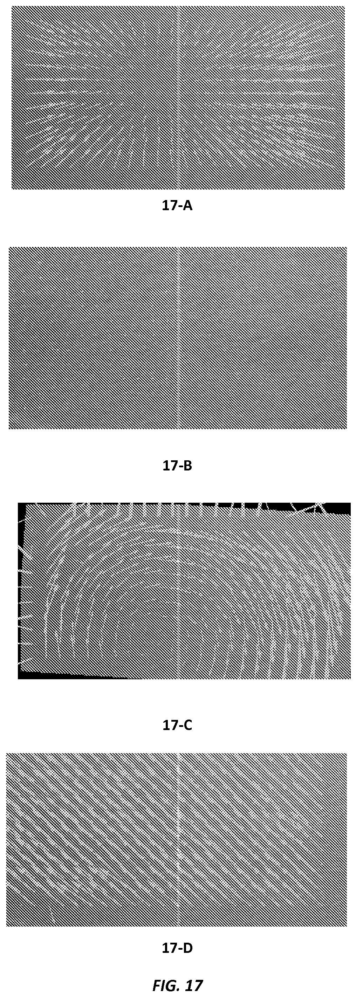

La figure 17 présente des exemples de transformations relatives appliquées à une des deux acquisitions d'un même sujet matériel, montrant des figures largement régulières de champs de vecteurs de similarité et illustrant les possibilités de mise en œuvre en temps réel si un utilisateur agit sur un écran tactile en même temps que les calculs et représentations visuelles ont lieu. La vignettes montrent respectivement :
- 17-A une Expansion de 5 %
- 17-B un Recalage (transformation quasi nulle) - 17-C une Rotation de 5° combinée à une translation
- 17-D une simple Translation.

## Revendications

1. Procédé de détermination d'une empreinte relationnelle entre deux images comprenant les étapes suivantes:
- la mise en œuvre d'une première image d'un sujet matériel et d'une image de référence différente de la première image,
- une phase de calcul de vecteurs de similarité entre des pavés appartenant respectivement à l'image du sujet matériel et à l'image de référence, en utilisant une méthode de calcul définie par un type d'indicateur de similarité et un rang de similarité pour obtenir un champ de vecteurs d'empreinte, formé par les vecteurs de similarité, comprenant au moins une région désordonnée au sens d'un critère entropique,
- une phase d'enregistrement en tant qu'empreinte relationnelle d'une représentation du champ de vecteurs d'empreinte calculé,
- une étape d'utilisation en tant que signature relationnelle d'une représentation numérique de l'empreinte relationnelle.

2. Procédé selon la revendication précédente, caractérisé en que qu'il comprend une étape de compression du champ de vecteurs d'empreinte et enregistrement en tant qu'empreinte relationnelle du résultat de la compression.

3. Procédé selon l'une des revendications précédentes, **caractérisé en ce que** l'enregistrement de l'empreinte relationnelle est associé avec l'enregistrement d'une au moins des images utilisées.

4. Procédé selon l'une des revendications précédentes, **caractérisé en ce que** l'image de référence est identique pour un ensemble de sujets matériels considérés.

5. Procédé selon l'un des revendications précédentes, **caractérisé en ce que** l'image de référence est une concaténation de plusieurs images.

6. Procédé selon l'une des revendications précédentes, **caractérisé en ce que** la phase de calcul du champ de vecteurs d'empreinte comprend préalablement au calcul du champ de vecteurs d'empreinte une étape de transformation de l'une et/ou l'autre des deux images.

7. Procédé selon la revendication précédente, **caractérisé en ce que** l'étape de transformation est un recalage.

8. Procédé selon la revendication précédente **caractérisé en ce qu'**il comprend un calcul d'une empreinte relationnelle de l'image du sujet matériel en relation avec l'image de référence, un recalage de l'image du sujet matériel par rapport à l'image de référence sur la base de la l'empreinte relationnelle calculée et calcul d'une autre empreinte relationnelle de l'image recalée du sujet matériel en relation avec l'image de référence, cette autre empreinte relationnelle étant utilisée pour déterminer la signature relationnelle.

9. Procédé selon l'une des revendications précédentes, **caractérisé en ce que** la phase de calcul de vecteurs de similarité comprend :
- une étape détermination d'un repère commun à l'image du sujet matériel et à l'image de référence,
- une étape de détermination, dans l'une des deux images, d'un ensemble de pavés de référence chacun associé à au moins un point de référence disposant de coordonnées dans le repère commun,
- une étape de recherche dans l'autre des deux images de pavés de concordance qui sont chacun appariés à un pavé de référence avec lequel ils présentent un certain degré de similarité et sont chacun associés à au moins un point de référence disposant de coordonnées dans le repère commun,
- calcul des coordonnées de chaque vecteur de similarité à partir des coordonnées des points de référence de chaque pavé de référence et du pavé de concordance associé.

10. Procédé selon la revendication 9, **caractérisé en ce que** les pavés de références sont déterminés de manière auto-adaptative au moyen d'un algorithme de détection de caractéristiques locales.

11. Procédé selon l'une des revendications 9 ou 10, **caractérisé en ce que** l'étape de recherche de pavés de concordance comprend :
- la détermination, dans l'autre image, d'un ensemble de pavés d'inspection,
- pour chaque pavé de référence :
- le calcul d'une série d'indice de similarité, chaque indice de similarité étant calculé entre la portion d'une des deux images correspondant audit pavé de référence et la portion de l'autre image correspondant à un pavé d'inspection, le pavé d'inspection étant différent pour chaque calcul d'indice de similarité,
- la sélection comme pavé de concordance associé audit pavé de référence, le pavé d'inspection présentant un degré de similarité donné avec ledit pavé de référence.

12. Procédé selon une des revendications précédentes **caractérisé en ce qu'**il comprend, préalablement à la phase d'enregistrement, une étape de décomposition du champ de vecteurs de similarité en au moins une partie dite régulière et une partie dite désordonnée consistant à attribuer chacun des vecteurs de similarité à l'une ou l'autre des parties régulière et désordonnée selon un critère entropique régional.

13. Procédé selon la revendication précédente **caractérisé en ce que** lorsque l'optimum local de similarité est choisi à un ordre égal à un, pour un rang local considéré, le vecteur de similarité concerné est ajouté soit dans la composante désordonnée du champ de vecteurs d'empreinte, soit dans la composante régulière du champ de vecteurs d'empreinte, selon qu'il vérifie ou non le critère entropique régional, le vecteur nul étant alors ajouté respectivement dans la composante régulière, ou dans la composante désordonnée.

14. Procédé d'authentification d'une image candidate par rapport à une image authentique **caractérisé en ce qu'**il met en œuvre le procédé de détermination d'une empreinte relationnelle selon l'une des revendications 1 à 13.

15. Procédé d'authentification selon la revendication précédente **caractérisé en ce qu'**une signature relationnelles de l'image candidate et une signature relationnelle de l'image authentique sont déterminées au moyen du procédé selon l'une des revendications 1 à 13 et sont comparées l'une à l'autre selon un critère statistique de similarité permettant de considérer la signature relationnelle candidate comme similaire à la signature relationnelle enregistrée si un seuil de décision est atteint.

## Patentansprüche

1. Verfahren zur Bestimmung eines relationalen Abdrucks zwischen zwei Bildern, das die folgenden Schritte umfasst:
- die Verwendung eines ersten Bildes eines materiellen Objekts und eines Referenzbildes, das sich von dem ersten Bild unterscheidet,
- eine Phase der Berechnung von Ähnlichkeitsvektoren zwischen Blöcken, die jeweils zum Bild des materiellen Objekts und zum Referenzbild gehören, unter Verwendung einer Berechnungsmethode, die durch eine Art von Ähnlichkeitsindikator und einen Ähnlichkeitsrang definiert ist, um ein Feld von Abdruckvektoren zu erhalten, das aus den Ähnlichkeitsvektoren gebildet wird und mindestens eine im Sinne eines Entropiekriteriums ungeordnete Region umfasst,
- eine Phase der Speicherung einer Darstellung des berechneten Feldes von Abdruckvektoren als relationalen Abdruck,
- einen Schritt der Verwendung einer digitalen Darstellung des relationalen Abdrucks als relationale Signatur.

2. Verfahren nach dem vorstehenden Anspruch, **dadurch gekennzeichnet, dass** es einen Schritt der Komprimierung des Feldes der Abdruckvektoren und der Speicherung des Ergebnisses der Komprimierung als relationalen Abdruck umfasst.

3. Verfahren nach einem der vorstehenden Ansprüche, **dadurch gekennzeichnet, dass** die Speicherung des relationalen Abdrucks mit der Speicherung mindestens eines der verwendeten Bilder verknüpft ist.

4. Verfahren nach einem der vorstehenden Ansprüche, **dadurch gekennzeichnet, dass** das Referenzbild für eine Gruppe von betrachteten materiellen Objekten identisch ist.

5. Verfahren nach einem der vorstehenden Ansprüche, **dadurch gekennzeichnet, dass** das Referenzbild eine Verkettung mehrerer Bilder ist.

6. Verfahren nach einem der vorstehenden Ansprüche, **dadurch gekennzeichnet, dass** die Phase der Berechnung des Feldes der Abdruckvektoren vor der Berechnung des Feldes der Abdruckvektoren einen Schritt der Umwandlung des einen und/oder des anderen der beiden Bilder umfasst.

7. Verfahren nach dem vorstehenden Anspruch, **dadurch gekennzeichnet, dass** der Umwandlungsschritt eine Neukalibrierung ist.

8. Verfahren nach dem vorstehenden Anspruch, **dadurch gekennzeichnet, dass** es Folgendes umfasst: Berechnung eines relationalen Abdrucks des Bildes des materiellen Objekts in Bezug auf das Referenzbild, Neupositionierung des Bildes des materiellen Objekts in Bezug auf das Referenzbild auf der Grundlage des berechneten relationalen Abdrucks und Berechnung eines weiteren relationalen Abdrucks des neupositionierten Bildes des materiellen Objekts in Bezug auf das Referenzbild, wobei der andere relationale Fingerabdruck zur Bestimmung der relationalen Signatur verwendet wird.

9. Verfahren nach einem der vorstehenden Ansprüche, **dadurch gekennzeichnet, dass** die Phase der Berechnung von Ähnlichkeitsvektoren Folgendes umfasst:
- einen Schritt zum Bestimmen eines gemeinsamen Bezugssystems für das Bild des materiellen Objekts und das Referenzbild,
- einen Schritt zum Bestimmen einer Reihe von Referenzblöcken in einem der beiden Bilder, die jeweils mit mindestens einem Referenzpunkt mit Koordinaten im gemeinsamen Bezugssystem verknüpft sind,
- einen Schritt zum Suchen in dem anderen der beiden Bilder nach Übereinstimmungsblöcken, die jeweils einem Referenzblock zugeordnet sind, mit dem sie einen bestimmten Grad an Ähnlichkeit aufweisen, und die jeweils mit mindestens einem Referenzpunkt mit Koordinaten im gemeinsamen Koordinatensystem verknüpft sind,
- Berechnung der Koordinaten jedes Ähnlichkeitsvektors anhand der Koordinaten der Referenzpunkte jedes Referenzblocks und des verknüpften Übereinstimmungsblocks.

10. Verfahren nach Anspruch 9, **dadurch gekennzeichnet, dass** die Referenzblöcke mittels eines Algorithmus zur Erkennung lokaler Merkmale auf selbstadaptive Weise bestimmt werden.

11. Verfahren nach einem der Ansprüche 9 oder 10, **dadurch gekennzeichnet, dass** der Schritt der Suche nach übereinstimmenden Blöcken Folgendes umfasst:
- die Bestimmung einer Reihe von Inspektionsblöcken in dem anderen Bild,
- für jeden Referenzblock:
- die Berechnung einer Reihe von Ähnlichkeitsindizes, wobei jeder Ähnlichkeitsindex zwischen dem Abschnitt eines der beiden Bilder, der dem Referenzblock entspricht, und dem Abschnitt des anderen Bildes, der einem Inspektionsblock entspricht, berechnet wird, wobei der Inspektionsblock für jede Ähnlichkeitsindexberechnung unterschiedlich ist,
- die Auswahl des Inspektionsblocks, der einen bestimmten Ähnlichkeitsgrad mit dem Referenzblock aufweist, als dem Referenzblock zugeordneten Übereinstimmungsblock.

12. Verfahren nach einem der vorstehenden Ansprüche, **dadurch gekennzeichnet, dass** es vor der Phase der Speicherung einen Schritt der Zerlegung des Feldes der Ähnlichkeitsvektoren in mindestens einen sogenannten regulären Teil und einen sogenannten ungeordneten Teil umfasst, der darin besteht, jeden der Ähnlichkeitsvektoren gemäß einem regionalen Entropiekriterium dem regulären oder dem ungeordneten Teil zuzuordnen.

13. Verfahren nach dem vorhergehenden Anspruch, **dadurch gekennzeichnet, dass**, wenn das lokale Ähnlichkeitsoptimum für einen betrachteten lokalen Rang mit einer Ordnung gleich Eins gewählt wird, der betreffende Ähnlichkeitsvektor entweder zur ungeordneten Komponente des Feldes der Abdruckvektoren oder zur regelmäßigen Komponente des Feldes der Abdruckvektoren hinzugefügt wird, je nachdem, ob er das regionale Entropiekriterium erfüllt oder nicht, wobei der Nullvektor dann jeweils zu der regulären Komponente oder zu der ungeordneten Komponente hinzugefügt wird.

14. Verfahren zur Authentifizierung eines Kandidatenbildes in Bezug auf ein authentisches Bild, **dadurch gekennzeichnet, dass** es das Verfahren zur Bestimmung eines relationalen Abdrucks nach einem der Ansprüche 1 bis 13 verwendet.

15. Verfahren zur Authentifizierung nach dem vorstehenden Anspruch, **dadurch gekennzeichnet, dass** eine relationale Signatur des Kandidatenbildes und eine relationale Signatur des authentischen Bildes mittels des Verfahrens nach einem der Ansprüche 1 bis 13 bestimmt werden und anhand eines statistischen Ähnlichkeitskriteriums miteinander verglichen werden, wobei die relationale Kandidatensignatur als ähnlich zur gespeicherten relationalen Signatur angesehen werden kann, wenn ein Entscheidungsschwellenwert erreicht ist.

## Claims

1. Method for determining a relational imprint between two images comprising the following steps:
- the implementation of a first image and of a material subject and of a reference image different from the first image,
- a phase of calculating vectors of similarity between tiles belonging respectively to the image of the material subject and to the reference image, by using a calculating method defined by a type of similarity indicator and a similarity row to obtain a field of imprint vectors, formed by the similarity vectors, comprising at least one haphazard region disordered in the sense of an entropy criterion,
- a phase of recording in the guise of relational imprint of a representation of the calculated field of imprint vectors,
- a step of using, in the guide of a relational signature, a digital representation of the relational imprint.

2. Method according to the preceding claim, **characterized in that** it comprises a step of compressing the field of imprint vectors and recording in the guise of a relationship imprint of the result of the compression.

3. Method according to any one of the preceding claims, **characterized in that** the recording of the relational imprint is associated with the recording of at least one of the images used.

4. Method according to any one of the preceding claims, **characterized in that** the reference image is identical for a set of material subjects considered.

5. Method according to any one of the preceding claims, **characterized in that** the reference image is a concatenation of several images.

6. Method according to any one of the preceding claims, **characterized in that** the phase of calculating the field of imprint vectors comprises, prior to the calculation of the field of imprint vectors, a step of transforming one and/or the other of the two images.

7. Method according to the preceding claim, **characterized in that** the transformation step is a recalibration.

8. Method according to the preceding claim, **characterized in that** it comprises a calculation of a relational imprint of the image of the material subject in relation to the reference image, a recalibration of the image of the material subject with respect to the reference image, based on the calculated relational imprint and calculation of another relational imprint of the recalibrated image of the material subject in relation to the reference image, this other relational imprint being used to determine the relational signature.

9. Method according to any one of the preceding claims, **characterized in that** the phase of calculating similarity vectors comprises:
- a step of determining a system which is common to the image of the material subject and to the reference image,
- a step of determining, in one of the two images, a set of reference tiles, each associated with at least one reference point having coordinates in the common system,
- a step of searching in the other of the two images of concordance tiles, which are each matched with a reference tile, with which they have a certain degree of similarity, and are each associated with at least one reference point having coordinates in the common system,
- calculating the coordinates of each similarity vector from the coordinates of the reference points of each reference tile and of the associated concordance tile.

10. Method according to claim 9, **characterized in that** the reference tiles are determined self-adaptively by means of a local characteristic detection algorithm.

11. Method according to any one of claims 9 or 10, **characterized in that** the concordance tile search step comprises:
- the determination, in the other image, of a set of inspection tiles,
- for each reference tile:
- the calculation of a series of similarity indices, each similarity index being calculated between the portion of one of the two images corresponding to said reference tile and the portion of the other image corresponding to an inspection tile, the inspection tile being different for each similarity index calculation,
- the selection as a concordance tile associated with said reference tile, the inspection tile having a given degree of similarity with said reference tile.

12. Method according to any one of the preceding claims, **characterized in that** it comprises, prior to the recording phase, a step of breaking down the field of similarity vectors into at least one so-called regular part and one so-called haphazard, disordered part, consisting of allocating each of the similarity vectors to one or the other of the regular and haphazard, disordered parts, according to a regional entropy criterion.

13. Method according to the preceding claim, **characterized in that** when the local optimum of similarity is chosen at an order equal to one, for a local row considered, the similarity vector in question is added, either in the haphazard, disordered component of the field of imprint vectors, or in the regular component of the field of imprint vectors, according to which it verifies or not the regional entropy criterion, the zero vector thus being added respectively in the regular component, or in the haphazard, disordered component.

14. Method for authenticating a candidate image with respect to an authentic image, **characterized in that** it implements the method for determining a relational imprint according to any one of claims 1 to 13.

15. Authentication method according to the preceding claim, **characterized in that** a relational signature of the candidate image and a relational signature of the authentic image are determined by means of the method according to any one of claims 1 to 13, and are compared with one another, according to a statistical similarity criterion, making it possible to consider the candidate relational signature as similar to the recorded relational signature, if a decision threshold is reached.
